# EUROPEAN PATENT APPLICATION

(11) **EP 4 626 119 A1**
(43) Date of publication of application: **01.10.2025**
(21) Application number: 23919034.1
(22) Date of filing: 01.02.2023
(51) Int. Cl.: H04W 72/232

(54) **TIME DOMAIN RESOURCE INDICATION METHOD, DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: ZHANG, Yi, Dongguan, Guangdong 523860 (CN); LIN, Yanan, Dongguan, Guangdong 523860 (CN)
(74) Representative: Taor, Simon Edward William
(86) International application number: PCT/CN2023/074144
(87) International publication number: WO 2024/159456

(57) **Abstract**

Provided in the embodiments of the present application are a time domain resource indication method, a device and a storage medium. The method comprises: a terminal device receiving first downlink control information (DCI), which is sent by a network device, the first DCI being used for scheduling at least one data transmission, wherein time domain resource information corresponding to a first data transmission of the at least one data transmission is determined on the basis of a target time domain resource assignment (TDRA) table, which corresponds to the first data transmission, and the first DCI, and a first field in the first DCI is used for indicating time domain resource information corresponding to each data transmission of the at least one data transmission.

## Description

### TECHNICAL FIELD

Embodiments of the present disclosure relate to the technical field of mobile communications, and in particular to a method for indicating a time domain resource, a device and a storage medium.

### BACKGROUND

In related art, in the fifth generation (5G) system, that is, the new radio (NR) system, a network configures different Downlink Control Information (DCI) formats for terminals to meet scheduling requirements of various scenarios and network configurations. In the NR system, a single DCI can only schedule one data transmission.

In certain scenarios, there is a need to utilize limited configured resources for a Physical Downlink Control Channel (PDCCH) to schedule as many data transmissions as possible. Therefore, a proposal has been proposed where a single DCI supports the scheduling of a plurality of data transmissions, and the DCI can schedule at least one data transmission. In a scenario where a single DCI can schedule at least one data transmission, how to determine time domain resource information corresponding to each data transmission is a problem that needs to be solved.

### SUMMARY

Embodiments of the present disclosure provide a method for indicating a time domain resource, a device and a storage medium.

A method for indicating a time domain resource provided by the embodiments of the present disclosure includes the following operation.

A terminal device receives first downlink control information (DCI) from a network device, the first DCI being used for scheduling at least one data transmission.

Herein, time domain resource information corresponding to a first data transmission in the at least one data transmission is determined based on the first DCI and a target time domain resource assignment (TDRA) table corresponding to the first data transmission, and a first field in the first DCI is used for indicating time domain resource information corresponding to each of the at least one data transmission.

A method for indicating a time domain resource provided by the embodiments of the present disclosure includes the following operation.

A network device sends first downlink control information (DCI) to a terminal device, the first DCI being used for scheduling at least one data transmission.

Herein, time domain resource information corresponding to a first data transmission in the at least one data transmission is determined based on the first DCI and a target time domain resource assignment (TDRA) table corresponding to the first data transmission, and a first field in the first DCI is used for indicating time domain resource information corresponding to each of the at least one data transmission.

A terminal device provided by the embodiments of the present disclosure includes a first communication unit.

The first communication unit is configured to receive first downlink control information (DCI) from a network device, the first DCI being used for scheduling at least one data transmission.

Herein, time domain resource information corresponding to a first data transmission in the at least one data transmission is determined based on the first DCI and a target time domain resource assignment (TDRA) table corresponding to the first data transmission, and a first field in the first DCI is used for indicating time domain resource information corresponding to each of the at least one data transmission.

A network device provided by the embodiments of the present disclosure includes a second communication unit.

The second communication unit is configured to send first downlink control information (DCI) to a terminal device, the first DCI being used for scheduling at least one data transmission.

Herein, time domain resource information corresponding to a first data transmission in the at least one data transmission is determined based on the first DCI and a target time domain resource assignment (TDRA) table corresponding to the first data transmission, and a first field in the first DCI is used for indicating time domain resource information corresponding to each of the at least one data transmission.

A communication device provided by the embodiments of the present disclosure may be the terminal device in the above scheme, and the communication device includes a processor and a memory. The memory is configured to store a computer program, and the processor is configured to call and execute the computer program stored in the memory to implement the above method for indicating the time domain resource performed by the terminal device.

A communication device provided by the embodiments of the present disclosure may be the network device in the above scheme, and the communication device includes a processor and a memory. The memory is configured to store a computer program, and the processor is configured to call and execute the computer program stored in the memory to implement the above method for indicating the time domain resource performed by the network device.

A chip provided by the embodiments of the present disclosure is used for implementing the above method for indicating the time domain resource.

Specifically, the chip includes a processor, which is configured to call and execute a computer program in a memory to cause a device equipped with the chip to implement the above method for indicating the time domain resource in any one of the above embodiments.

A computer-readable storage medium provided by the embodiments of the present disclosure is configured to store a computer program that causes a computer to implement the above method for indicating the time domain resource.

A computer program product provided by the embodiments of the present disclosure includes computer program instructions that cause a computer to implement the method for indicating the time domain resource in any one of the above embodiments.

A computer program provided by the embodiments of the present disclosure, when running on a computer, causes the computer to implement the method for indicating the time domain resource in any one of the above embodiments.

According to the above technical solution, the terminal device receives first DCI for scheduling at least one data transmission, and a first field in the first DCI is used to indicate time domain resource information corresponding to each of the at least one data transmission, where the time domain resource information corresponding to the first data transmission in the at least one data transmission scheduled by the first DCI is determined according to the first DCI and a target TDRA table corresponding to the first data transmission. In this way, the time domain resource information corresponding to each data transmission can be determined for the at least one data transmission scheduled by the DCI.

### BRIEF DESCRIPTION OF THE DRAWINGS

The accompanying drawings illustrated herein are used to provide further understanding of the present disclosure and constitute a part of the present disclosure, and illustrative embodiments of the present disclosure and their description are used to explain the present disclosure, but do not constitute improper limitation to the present disclosure. In the accompanying drawings:
FIG. 1 is a schematic diagram of an application scenario according to an embodiment of the present disclosure.
FIG. 2 is a first optional schematic flowchart of a method for indicating a time domain resource according to an embodiment of the present disclosure.
FIG. 3 is a second optional schematic flowchart of a method for indicating a time domain resource according to an embodiment of the present disclosure.
FIG. 4 is a third optional schematic flowchart of a method for indicating a time domain resource according to an embodiment of the present disclosure.
FIG. 5 is an optional structural diagram of a terminal device according to an embodiment of the present disclosure.
FIG. 6 is an optional structural diagram of a network device according to an embodiment of the present disclosure.
FIG. 7 is a schematic structural diagram of a communication device provided by an embodiment of the present disclosure.
FIG. 8 is a schematic structural diagram of a chip according to an embodiment of the present disclosure.
FIG. 9 is a schematic block diagram of a communication system provided by an embodiment of the present disclosure.

### DETAILED DESCRIPTION

The technical solution of the embodiments of the present disclosure will be described below in conjunction with the drawings in the embodiments of the present disclosure, and it will be apparent that the described embodiments are part of the embodiments of the present disclosure, but not all of them. Based on the embodiments in the present disclosure, all other embodiments obtained by those of ordinary skill in the art without creative work fall within the scope of protection of the present disclosure.

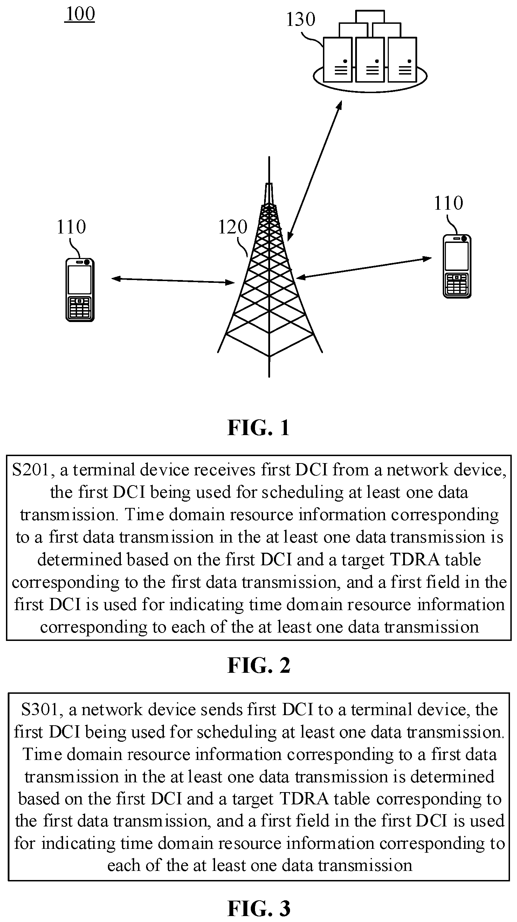

FIG. 1 is a schematic diagram of an application scenario according to an embodiment of the present disclosure.

As illustrated in FIG. 1, a communication system 100 may include terminal devices 110 and a network device 120. The network device 120 may communicate with the terminal devices 110 through an air interface. Multi-service transmission is supported between the terminal devices 110 and the network device 120.

It is to be understood that embodiments of the present disclosure are illustrative only with the communication system 100 but are not limited thereto. That is, the technical solution of the embodiments of the present disclosure may be applied to various communication systems, for example, a Long Term Evolution (LTE) system, an LTE Time Division Duplex (TDD), a Universal Mobile Telecommunications System (UMTS), an Internet of Things (IoT) system, a Narrow Band Internet of Things (NB-IoT) system, an enhanced Machine-Type Communications (eMTC) system, a 5G communication system (also called a NR communication system), or a future communication system, etc.

In the communication system 100 illustrated in FIG. 1, the network device 120 may be an access network device that communicates with the terminal devices 110. The access network device may provide communication coverage for a particular geographic area and may communicate with the terminal devices 110 (e.g. UE) located within the coverage area.

The network device 120 may be an Evolutional Node B (eNB or eNodeB) in a Long Term Evolution (LTE) system, or a gNB in a Next Generation Radio Access Network (NG RAN) device or an NR system, or a wireless controller in a Cloud Radio Access Network (CRAN). Or the network device 120 may be a relay station, an access point, an in-vehicle device, a wearable device, a hub, a switch, a bridge, a router, or a network device in a future evolved Public Land Mobile Network (PLMN), etc.

The terminal device 110 may be any terminal device including but not limited to a terminal device in wired or wireless connection with the network device 120 or other terminal devices.

For example, the terminal device 110 may refer to an access terminal, User Equipment (UE), a subscriber unit, a subscriber station, a mobile station, a mobile platform, a remote station, a remote terminal, a mobile device, a user terminal, a terminal, a wireless communication device, a user agent, or a user device. The access terminal may be a cellular phone, a cordless phone, a session initiation protocol (SIP) telephone, an IoT device, a satellite handheld terminal, a wireless local loop (WLL) station, a personal digital assistant (PDA), a handheld device with wireless communication function, a computing device or other processing device connected to a wireless modem, an in-vehicle device, a wearable device, a terminal device in the 5G network or a terminal device in the future evolved network, etc.

The terminal devices 110 may be used in Device to Device (D2D) communication.

The wireless communication system 100 may also include a core network device 130 that communicates with a base station. The core network device 130 may be a 5G Core (5GC) device, for example, an Access and Mobility Management Function (AMF), for another example, an Authentication Server Function (AUSF), for another example, a User Plane Function (UPF), and for another example, a Session Management Function (SMF). Optionally, the core network device 130 may also be an Evolved Packet Core (EPC) device of the LTE network, for example, a Session Management Function + Core Packet Gateway (SMF+PGW-C) device. It is to be understood that SMF + PGW-C can achieve the same functions as SMF and PGW-C simultaneously. In the process of network evolution, the core network device may also be called by other names, or a new network entity may be formed by dividing the functions of the core network, which is not limited by the embodiments of the present disclosure.

Various functional units in the communication system 100 may also establish connections therebetween through a next generation (NG) interface to realize communication.

For example, the terminal device establishes an air interface connection with the access network device through a Uu interface for transmitting user plane data and control plane signaling. The terminal device may establish a control plane signaling connection with an AMF through NG interface 1 (abbreviated as N1). The access network device, such as a next generation radio access base station (gNB) may establish a user plane data connection with a UPF through NG interface 3 (abbreviated as N3). The access network device may establish a control plane signaling connection with the AMF through NG interface 2 (abbreviated as N2). The UPF may establish a control plane signaling connection with an SMF through NG interface 4 (abbreviated as N4). UPF may exchange user plane data with a data network through NG interface 6 (abbreviated as N6). The AMF may establish a control plane signaling connection with the SMF through NG interface 11 (abbreviated as N11). The SMF may establish a control plane signaling connection with a PCF through NG interface 7 (abbreviated as N7).

FIG. 1 exemplarily illustrates a base station, a core network device and two terminal devices. Optionally, the wireless communication system 100 may include multiple base stations, and other numbers of terminal devices may be included within the coverage of each base station, which is not limited by embodiments of the present disclosure.

It should be noted that FIG. 1 is only illustrative of the system to which the present disclosure is applied, and of course, the methods illustrated in the embodiments of the present disclosure may also be applied to other systems. In addition, the terms "system" and "network" of the present disclosure are often used interchangeably herein. In the present disclosure, the term "and/or" is used to describe an association relationship of associated objects, and represents that there may be three relationships. For example, A and/or B may represent the following three situations: i.e., independent existence of A, existence of both A and B and independent existence of B. In addition, the character "/" in the present disclosure generally represents that an "or" relationship is formed between the previous and next associated objects. It is to be understood that the reference to "indicate" in embodiments of the present disclosure may be a direct indication, may be an indirect indication, or may indicate an association relationship. For example, A indicates B, which may mean that A directly indicates B, for example, B may be obtained through A. It may also mean that A indirectly indicates B, for example, A indicates C, and B may be obtained by C. It may also indicate that there is an association relationship between A and B. It is to be understood that "correspond" in the description of embodiments of the present disclosure may mean that there is a direct correspondence or an indirect correspondence between the two, may also mean that there is an association relationship between the two, may also be a relationship between indication and being indicated, configuration and being configured, etc. It should also be understood that the "predefined" or "predefined rules" referred to in embodiments of the present disclosure may be implemented by pre-storing corresponding codes, tables, or other manners that may be used to indicate relevant information in devices (e.g., including terminal devices and network devices), the specific implementation of which is not limited by the present disclosure. For example, predefined may refer to what is defined in the protocol. It should also be understood that, in embodiments of the present disclosure, the "protocol" may refer to standard protocols in the communication field, such as LTE protocol, NR protocol, and related protocols applied in future communication systems, which are not limited herein.

In order to facilitate understanding of the technical solution of the embodiments of the present disclosure, related technologies of the embodiments of the present disclosure are described as follows. The following related technologies may be arbitrarily combined with the technical solution of the embodiments of the present disclosure as optional solutions, all of which belong to the protection scope of the embodiments of the present disclosure.

### 1. Time domain resource information for Physical Downlink Shared Channel (PDSCH)/Physical Uplink Shared Channel (PUSCH)

In the standard, a single DCI can schedule one PDSCH or PUSCH, and the DCI includes a TDRA field for indicating time domain resource information for the PDSCH or PUSCH scheduled by the DCI. The time domain resource information includes the following information: a slot in which the PDSCH/PUSCH is located, an occupied symbol, and a mapping type. The specific manner for determining the time domain resource information for the PDSCH/PUSCH is as follows:
- a time domain resource assignment (TDRA) table is configured for a terminal device through Radio Resource Control (RRC) parameters (e.g., configured cell specific or Bandwidth Part (BWP) specific PDSCH TDRA table (i.e., pdsch-TimeDomainAllocationList) / PUSCH TDRA table (i.e., pusch-TimeDomainAllocationList). Optionally, the TDRA table may be predefined by a protocol (e.g., default A/B/C). The TDRA table includes one or more rows, each containing the following parameters: slot offset K0/K2, start and length indicator (SLIV) (or directly start symbol S and allocation length L), and mapping type of PDSCH/PUSCH. The slot offset K0/K2 is used to determine a slot offset between a slot where the DCI is located and a slot where the PDSCH/PUSCH is located. The SLIV (or S and L) is used to determine a start symbol and the number of symbols occupied by the PDSCH/PUSCH. The mapping type is used to determine a mapping type of the PDSCH/PUSCH.
- a TDRA row is indicated from the TDRA table configured by RRC or the TDRA table specified by a protocol through a TDRA field included in the DCI. For example, a value m of a TDRA field provides a row index m+1 to each of the above tables.

In the protocol, the manner for determining the time domain resource information for the PDSCH or PUSCH is as described above. The TDRA field in the DCI indicates an index that is indexed to a TDRA table. So, how is the TDRA table determined? NR also provides the following rules (embodiments of the present disclosure focus on a UE specific search space (USS), so only a manner for determining the TDRA table of the USS is listed).

Determination Table 1 and Determination Table 2 are used to determine the time domain resource information for the PDSCH. Determination Table 1 is used for PDSCH scheduled by DCI formats 1_0/1_1, and Determination Table 2 is used for PDSCH scheduled by DCI format 1_2. During a standardization process of an Ultra-reliable Low Latency Communication (URLLC) project, in order to make a Physical Downlink Control Channel (PDCCH) meet a reliability requirement of 99.999% of the URLLC, a scheme of compact DCI, namely DCI format 0_2/1_2, was introduced. This scheme improves the reliability of downlink control information transmission by reducing a size of the DCI.

Determination Tables 3~5 are used to determine the time domain resource information for the PUSCH. Determination Tables 3, 4, and 5 are used for PUSCH scheduled by DCI format 0_0, DCI format 0_1, and DCI format 0_2 respectively.

As can be seen from Determination Tables 1~5, for the PDSCH, the TDRA table does not distinguish between DCI format 1_0 and DCI format 1_1. However, for the PUSCH, the TDRA table distinguishes between DCI format 0_0 and DCI format 0_1. This is because a function of indicating the number of repetitions dynamically (where the number of the repetitions is configured in the TDRA table) was introduced for PUSCH transmissions scheduled by DCI format 0_1 and DCI format 0_2 in the URLLC work project. Therefore, a TDRA table configuration dedicated to DCI format 0_1 and DCI format 0_2 was introduced.

**Table 1 Example of Determination Table 1**

| Radio Network Temporar y Identity (RNTI) | PDCCH search space | SS/PBCH block and Control Resource Set (CORESET) multiplexing pattern | PDSCH-ConfigCommon includes pdsch-TimeDomainAll ocationList | PDSCH-Config includes pdsch-TimeDomainAllo cationList | PDSCH time domain resource allocation to apply |
|---|---|---|---|---|---|
| C-RNTI, MCS-C-RNTI, CS-RNTI | UE specific search space | 1, 2, 3 | No | No | Default A |
| | | 1, 2, 3 | Yes | No | pdsch-TimeDomainAl locationList provided in PDSCH-ConfigCommon |
| | | 1, 2, 3 | No/Yes | Yes | pdsch-TimeDomainAl locationList provided in PDSCH-Config |

In Determination table 1 as illustrated in Table 1, for DCI format 1_0 or DCI format 1_1, a priority order of the TDRA table from high to low is: pdsch-TimeDomainAllocationList provided in PDSCH-Config, pdsch-TimeDomainAllocationList provided in PDSCH-Config Common, default A.

**Table 2 Example of Determination Table 2**

| PDSCH-ConfigCommon includes pdsch-TimeDomainAlloca tionList | PDSCH-Config includes pdsch-TimeDomainAlloca tionList | PDSCH-Config includes pdsch-TimeDomainAllocation ListForDCI-Format1-2 | PDSCH time domain resource allocation to apply |
|---|---|---|---|
| No | No | No | Default A |
| Yes | No | No | pdsch-TimeDomainAllocationL ist provided in PDSCH-ConfigCommon |
| No/Yes | Yes | No | pdsch-TimeDomainAllocationL ist provided in PDSCH-Config |
| No/Yes | No/Yes | Yes | pdsch-TimeDomainAllocationL istDCI-1-2 provided in PDSCH-Config |

In the Determination table 2 illustrated in Table 2, for DCI format 1_2, the priority order of the TDRA table from high to low is: pdsch-TimeDomainAllocationListDCI-1-2 provided in PDSCH-Config, pdsch-TimeDomainAllocationList provided in PDSCH-Config, pdsch-TimeDomainAllocationList provided in PDSCH-Config Common, default A.

**Table 3 Example of Determination Table 3**

| RNTI | PDCCH search space | pusch-ConfigCommon includes pusch-TimeDomainAllo cationList | pusch-Config includes pusch-TimeDomainAllocati onList | PUSCH time domain resource allocation to apply |
|---|---|---|---|---|
| C-RNTI, MCS-C- | UE specific | No | No | Default A |
| | | Yes | No | pusch- |
| RNTI, TC-RNTI, CS-RNTI | search space | | | TimeDomainAllocation List provided in pusch-ConfigCommon |
| | | No/Yes | Yes | pusch-TimeDomainAllocation List provided in pusch-Config |

In the Determination table 3 illustrated in Table 3, for DCI format 0_0, the priority order of the TDRA table is: pusch-TimeDomainAllocationList provided in pusch-Config, pusch-TimeDomainAllocationList provided in pusch-ConfigCommon, Default A.

**Table 4 Example of Determination Table 4**

| pusch-ConfigCommon includes pusch-TimeDomainAl locationList | pusch-Config includes pusch-TimeDomainAl locationList | pusch-Config includes pusch-TimeDomainAlloc ationListDCI-0-1 | pusch-Config includes pusch-TimeDomainAll ocationList-ForMultiPUSC H | PUSCH time domain resource allocation to apply |
|---|---|---|---|---|
| No | No | No | No | Default A |
| Yes | No | No | No | pusch-TimeDomainAlloc ationList provided in pusch-ConfigCommon |
| No/Yes | Yes | No | No | pusch-TimeDomainAlloc ationList provided in pusch-Config |
| No/Yes | No/Yes | Yes | - | pusch-TimeDomainAlloc ationListDCI-0-1 provided in pusch-Config |
| No/Yes | No/Yes | - | Yes | pusch-TimeDomainAlloc ationList-ForMultiPUSCH provided in pusch-Config |

In the Determination table 4 illustrated in Table 4, for DCI format 0_1, the priority order of the TDRA table is: pusch-TimeDomainAllocationList-ForMultiPUSCH provided in pusch-Config, pusch-TimeDomainAllocationListDCI-0-1 provided in pusch-Config, pusch-TimeDomainAllocationList provided in pusch-Config, pusch-TimeDomainAllocationList provided in pusch-ConfigCommon, Default A.

**Table 5 Example of Determination Table 5**

| pusch-ConfigCommon includes pusch-TimeDomainAllocat ionList | pusch-Config includes pusch-TimeDomainAlloc ationList | pusch-Config includes pusch-TimeDomainAllocatio nListDCI-0-2 | PUSCH time domain resource allocation to apply |
|---|---|---|---|
| No | No | No | Default A |
| Yes | No | No | pusch-TimeDomainAllocatio nList provided in pusch-ConfigCommon |
| No/Yes | Yes | No | pusch-TimeDomainAllocatio nList provided in pusch-Config |
| No/Yes | No/Yes | Yes | pusch-TimeDomainAllocatio nListDCI-0-2 provided in pusch-Config |

In Determination table 5 as illustrated in table 5, for DCI format 0_2, the priority order of the TDRA table from high to low is: pusch-TimeDomainAllocationListDCI-0-2 provided in pusch-Config, pusch-TimeDomainAllocationList provided in pusch-Config, pusch-TimeDomainAllocationList provided in pusch-ConfigCommon, Default A.

In some embodiments, related signalings for configuring the TDRA table through RRC parameters (e.g., pdsch-TimeDomainAllocationList/pusch-TimeDomainAllocationList) are as follows:

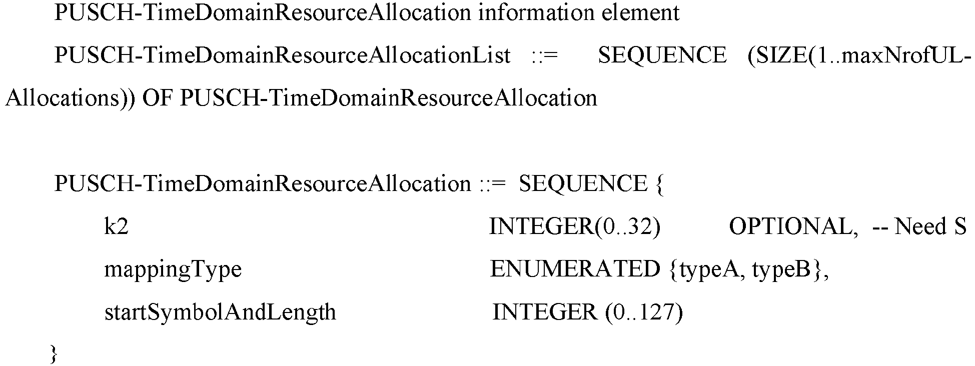

### 2. Multi-Cell scheduling

In Multi-Carrier systems, a feature that a single DCI schedules PDSCH/PUSCH of multiple cells is supported, and multiple scheduled cells (i.e., a cell combination) jointly scheduled by a single DCI are indicated by the DCI. Regarding how to indicate time domain resources for data transmission across the multiple scheduled cells, the following conclusion has been drawn: a single TDRA field in the DCI may indicate respective time domain resource information {i.e., SLIV, mapping type, scheduling offset K0 (or K2)} for the multiple scheduled cells. However, the specific design of the TDRA table requires further discussion.

During a design process of the TDRA table in related technologies, the following two viewpoints appear.

Viewpoint 1: a new joint TDRA table is designed, where each TDRA row in the new joint TDRA table contains TDRA information for all cells in a set of cells.

Viewpoint 1-1: the TDRA information (i.e., {SLIV, mapping type, scheduling offset K0 (or K2)}) for each cell is configured directly.

Viewpoint 1-2: the TDRA information for each cell is configured with one index to link to a legacy per-cell/per-BWP TDRA table corresponding to the cell.

Viewpoint 2: instead of designing the new joint TDRA table, the legacy per-cell or per-BWP TDRA table is multiplexed, and the TDRA field in the DCI indicates the same row in legacy TDRA tables corresponding to all scheduled cells.

For both viewpoint 1-2 and viewpoint 2, there is a common problem: PDSCH/PUSCH correspond to multiple TDRA tables, a final TDRA table applied depends on a DCI format and configuration information. Then, in multi-cell scheduling, if the DCI format used to determine the DCI table is no longer applicable to the DCI, so which TDRA table corresponding to the scheduled data transmission refers to is a problem that needs to be solved.

To facilitate understanding, the following explanations are provided for the concepts of a Cell group, a Physical Uplink Control Channel (PUCCH) group, a set of Cells, and a Cell combination.

The Cell group has a broadest scope among the above concepts, and refers to a group of cells configured by a network side (or a network device) for a terminal, such as a Master Cell Group (MCG) and a Secondary Cell Group (SCG).

The PUCCH group has a scope secondary to that of the Cell group among the above concepts. Cells contained in a PUCCH group are a subset or an entire set of cells contained in a cell group. A Cell group may contain one or two PUCCH groups. Hybrid Automatic Repeat request-Acknowledge (HARQ-ACK) codebooks corresponding to PDSCH on cells within a PUCCH group are fed back on the same PUCCH cell.

The set of Cells has a scope secondary to that of the PUCCH group among the above concepts. It can be understood as a set of cells that may be scheduled by DCI formats 0_X/1_X, serves as a unit configured for multi-cell scheduling. The set of cells may contain at least one cell combination that may be co-scheduled by DCI format 0_X/1_X. In other words, the set of Cells may be understood as a set of cells composed of all cells included in the above at least one cell combination. One PUCCH group may contain one or more sets of Cells.

In order to facilitate understanding of the technical solution of the embodiments of the present disclosure, the technical solution of the present disclosure will be described in detail by specific embodiments below. The above related technologies may be combined with the technical solution of the embodiments of the present disclosure arbitrarily as an optional solution, all of which belong to the protection scope of the embodiments of the present disclosure. Embodiments of the present disclosure include at least some of the following.

The method for indicating the time domain resource provided by the embodiments of the present disclosure is applied to a terminal device, and includes the following operation S201 as illustrated in FIG. 2.

At S201, the terminal device receives first downlink control information (DCI) from a network device, the first DCI being used for scheduling at least one data transmission. Time domain resource information corresponding to a first data transmission in the at least one data transmission is determined based on the first DCI and a target time domain resource assignment (TDRA) table corresponding to the first data transmission, and a first field in the first DCI is used for indicating time domain resource information corresponding to each of the at least one data transmission.

The method for indicating the time domain resource provided by the embodiments of the present disclosure is applied to a network device, and includes the following operation S301 as illustrated in FIG. 3.

At S301, the network device sends first downlink control information (DCI) to a terminal device, the first DCI being used for scheduling at least one data transmission. Time domain resource information corresponding to a first data transmission in the at least one data transmission is determined based on the first DCI and a target time domain resource assignment (TDRA) table corresponding to the first data transmission, and a first field in the first DCI is used for indicating time domain resource information corresponding to each of the at least one data transmission.

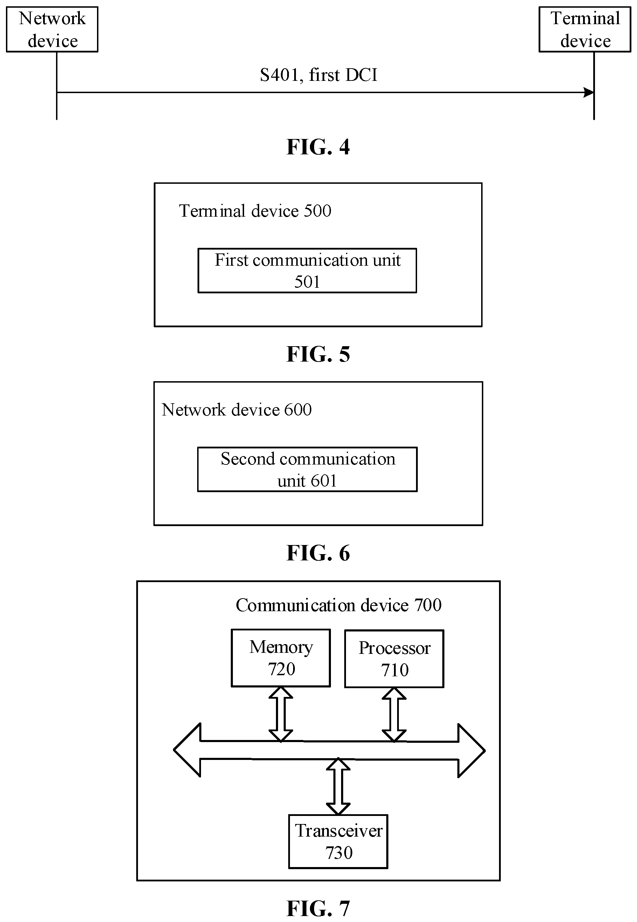

The method for indicating the time domain resource provided by the embodiments of the present disclosure is applied to a communication system including a terminal device and a network device, and the method includes the following operation S401 as illustrated in FIG. 4.

At S401, the network device sends first DCI to the terminal device.

The first DCI being used for scheduling at least one data transmission. Time domain resource information corresponding to a first data transmission in the at least one data transmission is determined based on the first DCI and a target TDRA table corresponding to the first data transmission, and a first field in the first DCI is used for indicating time domain resource information corresponding to each of the at least one data transmission.

The method for indicating the time domain resource provided in FIG. 2 to FIG. 4 provided in the embodiments of the present disclosure will be described as follows.

A network device sends first DCI to a terminal device, the first DCI being used for scheduling at least one data transmission. It can be understood that the first DCI supports scheduling one data transmission or more (i.e., at least two) data transmissions, that is, the first DCI may schedule at least one data transmission.

Data transmissions that the first DCI supports scheduling include uplink data transmission or downlink data transmission. In some embodiments, the uplink data transmission is PUSCH. In some embodiments, the downlink data transmission is PDSCH.

A DCI format adopted by the first DCI is a first DCI format. The first DCI format includes a first field indicating time domain resource information. The first field is used to indicate time domain resource information corresponding to each of the at least one data transmission scheduled by the first DCI. It can be understood that the time domain resource information corresponding to each data transmission is used to indicate time domain resources occupied by each data transmission.

In some embodiments, the first field is a TDRA field.

For a first data transmission in at least one data transmission, time domain resource information corresponding to the first data transmission is determined according to the first DCI and the target TDRA table corresponding to the first data transmission. The target TDRA table corresponding to the first data transmission is a TDRA table in at least one TDRA table corresponding to the first data transmission.

In the embodiments of the present disclosure, the first field indicates a target TDRA row corresponding to each of the at least one data transmission. The time domain resource information corresponding to the first data transmission is time domain resource information included in a target TDRA row in a target TDRA table corresponding to the first data transmission. The target TDRA table includes at least one TDRA row, and different TDRA rows correspond to different pieces of time domain resource information. It can be understood that the target TDRA row corresponding to the first data transmission is determined based on a value of the first field.

For different data transmissions in the at least one data transmission, their corresponding target TDRA tables are independent, and the manners for determining the corresponding target TDRA tables may be the same. The first data transmission may be any data transmission in the at least one data transmission, and the manner for determining a target TDRA table corresponding to each of the at least one data transmission will be described by taking the first data transmission as an example.

The target TDRA table corresponding to the first data transmission is determined from at least one TDRA table corresponding to the first data transmission.

After receiving the first DCI, the terminal device determines a target TDRA row corresponding to each of data transmission based on the first field for each of the at least one data transmission scheduled by the first DCI. For the first data transmission, the terminal device determines a target TDRA table corresponding to the first data transmission, and determines time domain resource information included in a target TDRA row in the target TDRA table as time domain resource information corresponding to the first data transmission.

In the method for indicating the time domain resource according to the embodiments of the present disclosure, the network device sends first DCI for scheduling at least one data transmission to the terminal device, the terminal device receives the first DCI for scheduling at least one data transmission, and a first field in the first DCI is used to indicate time domain resource information corresponding to each of the at least one data transmission. The time domain resource information corresponding to the first data transmission in the at least one data transmission scheduled by the first DCI is determined according to the first DCI and the target TDRA table corresponding to the first data transmission. In this way, the time domain resource information corresponding to each data transmission can be determined for the at least one data transmission scheduled by the DCI.

In some embodiments, if the first data transmission is an uplink data transmission, the target TDRA table is one of the following: a first uplink TDRA table configured by the network device for DCI format 0_1; a second uplink TDRA table configured by the network device through first configuration information, the first configuration information being terminal specific configuration information corresponding to the first data transmission; a third uplink TDRA table configured by the network device for DCI format 0_2; a fourth uplink TDRA table configured by the network device through second configuration information, the second configuration information being cell specific configuration information corresponding to the first data transmission; a fifth uplink TDRA table that is default and specified by a protocol; or a sixth uplink TDRA table for a first DCI format, the first DCI format being a DCI format adopted by the first DCI, and the first DCI format being different from the DCI format 0_1 and the DCI format 0_2.

It can be understood that when the first data transmission is the uplink data transmission, the at least one TDRA table includes one or more of: the first uplink TDRA table, the second uplink TDRA table, the third uplink TDRA table, the fourth uplink TDRA table, the fifth uplink TDRA table, and the sixth uplink TDRA table.

The first uplink TDRA table, the third uplink TDRA table, and the sixth uplink TDRA table may be configured through the first configuration information or the second configuration information. The sixth uplink TDRA table may also be predefined by the protocol.

The first configuration information is terminal specific configuration information corresponding to the uplink data transmission. In some embodiments, the first configuration information is a PUSCH configuration (i.e., PUSCH-Config), where the PUSCH-Config IE is used to configure UE specific PUSCH parameters. It can be understood that the PUSCH-Config is configuration information at a BWP level.

In some embodiments, the PUSCH-Config may be included in dedicated information of the uplink BWP (i.e., BWP-UplinkDedicated), where the BWP-UplinkDedicated is dedicated information used to configure the (UE specific) uplink BWP. The BWP-UplinkDedicated may include the following configuration information: PUCCH configuration (PUCCH-Config), PUSCH-Config.

The second configuration information is cell specific configuration information corresponding to the uplink data transmission. In some embodiments, the second configuration information is PUSCH common configuration (i.e., PUSCH-Config Common), where the PUSCH-Config Common IE is used to configure cell specific PUSCH parameters. It can be understood that the PUSCH-Config Common is configuration information at a cell level.

In some embodiments, the first uplink TDRA table is a pusch-TimeDomainAllocationList provided in PUSCH-Config for DCI format 0_1 (i.e., pusch-TimeDomainAllocationListDCI-0-1 provided in pusch-Config).

In some embodiments, the second uplink TDRA table is a pusch-TimeDomainAllocationList provided in PUSCH-Config (i.e., pusch-TimeDomainAllocationList provided in pusch-Config).

In some embodiments, the third uplink TDRA table is a pusch-TimeDomainAllocationList provided in PUSCH-Config for DCI format 0_2 (i.e., pusch-TimeDomainAllocationListDCI-0-2 provided in pusch-Config).

In some embodiments, the fourth uplink TDRA table is a pusch-TimeDomainAllocationList provided in PUSCH-Config Common (i.e., pusch-TimeDomainAllocationList provided in pusch-ConfigCommon).

In some embodiments, the fifth uplink TDRA table is an uplink Default A.

In some embodiments, the sixth uplink TDRA table is a pusch-TimeDomainAllocationList provided in PUSCH-Config for a first DCI format, such as pusch-TimeDomainAllocationListDCI-0-X provided in pusch-Config, where X is a positive integer greater than 2.

It can be understood that the first DCI format is a DCI format that supports scheduling at least two data transmissions, and is different from a DCI format (for example, DCI format 0_0, DCI format 0_1, DCI format 0_2, DCI format 1_0, DCI format 1_1, DCI format 1_2, etc.) that supports scheduling only one data transmission. The first DCI format may be labeled as, but is not limited to, DCI format 0_X/1_X, where X is greater than 2.

In some embodiments, if the first data transmission is a downlink data transmission, the target TDRA table is one of the following: a first downlink TDRA table configured by the network device through third configuration information, the third configuration information being terminal specific configuration information corresponding to the first data transmission; a second downlink TDRA table configured by the network device for DCI format 1_2; a third downlink TDRA table configured by the network device through fourth configuration information, the fourth configuration information being cell specific configuration information corresponding to the first data transmission; a fourth downlink TDRA table that is default and specified by a protocol; or a fifth downlink TDRA table for a first DCI format, the first DCI format being a DCI format adopted by the first DCI, and the first DCI format being different from the DCI format 1_2.

It can be understood that when the first data transmission is the downlink data transmission, the at least one TDRA table includes at least one of: the first downlink TDRA table, the second downlink TDRA table, the third downlink TDRA table, the fourth downlink TDRA table, and the fifth downlink TDRA table.

The second downlink TDRA table and the fifth downlink TDRA table may be configured through the third configuration information or the fourth configuration information. The fifth downlink TDRA table may also be predefined by the protocol.

The third configuration information is terminal specific configuration information corresponding to the downlink data transmission. In some embodiments, the third configuration information is a PDSCH configuration (i.e., PDSCH-Config), where the PDSCH-Config IE is used to configure UE specific PDSCH parameters. It can be understood that PDSCH-Config is configuration information at a BWP level.

In some embodiments, the PDSCH-Config may be included in dedicated information of the downlink BWP (i.e., BWP-DownlinkDedicated), where the BWP-DownlinkDedicated is dedicated information used to configure the (UE specific) downlink BWP. The BWP-DownlinkDedicated may include the following configuration information: PDCCH configuration (PDCCH-Config), PDSCH-Config.

The fourth configuration information is cell specific configuration information corresponding to the downlink data transmission. In some embodiments, the fourth configuration information is a PDSCH common configuration (PDSCH-Config Common), where the PDSCH-Config Common IE is used to configure cell specific PDSCH parameters. It can be understood that PDSCH-Config Common is configuration information at a cell level.

In some embodiments, the first downlink TDRA table is a pdsch-TimeDomainAllocationList provided in PDSCH-Config.

In some embodiments, the second downlink TDRA table is a pdsch-TimeDomainAllocationList provided in PDSCH-Config for DCI format 1_2 (i.e., pdsch-TimeDomainAllocationListDCI-1-2 provided in PDSCH-Config).

In some embodiments, the third downlink TDRA table is a pdsch-TimeDomainAllocationList provided in PDSCH-Config Common (i.e., pdsch-TimeDomainAllocationList provided in pdsch-ConfigCommon).

In some embodiments, the fourth downlink TDRA table is a downlink Default A.

In some embodiments, the fifth downlink TDRA table is a pdsch-TimeDomainAllocationList provided in PDSCH-Config for a first DCI format, such as pdsch-TimeDomainAllocationListDCI-1-X provided in PDSCH-Config, where X is a positive integer greater than 2.

In some embodiments, the target TDRA table is determined according to at least one of the following: information A, a first DCI format, the first DCI format being a DCI format adopted by the first DCI; information B, a second DCI format, the second DCI format being a DCI format used for scheduling one data transmission; or information C, a first TDRA table.

The terminal device may determine the target TDRA table based on one of the first DCI format, the second DCI format, and the first TDRA table.

If the terminal device is configured with only one of information A, information B, and information C, the terminal device may determine the target TDRA table based on one piece of configured information.

If the terminal device is configured with two or more of information A, information B, and information C, the terminal device may determine the target TDRA table directly based on one of information A, information B, and information C. In some embodiments, the terminal device determines the target TDRA table based on the information B, and at this time, the terminal device may or may not be configured with the information A.

The terminal device may determine the target TDRA table based on at least two of the first DCI format, the second DCI format, and the first TDRA table.

In some embodiments, the terminal device determines the target TDRA table according to the first DCI format and the second DCI format. If the terminal device cannot determine the target TDRA table according to the first DCI format (e.g., the terminal device is not configured with a TDRA table for the first DCI format), the target TDRA table is determined by the terminal device according to the second DCI format.

In some embodiments, the terminal device determines the target TDRA table according to the first DCI format and the first TDRA table. If the terminal device cannot determine the target TDRA table according to the first DCI format (e.g., the terminal device is not configured with a TDRA table for the first DCI format, that is, the first DCI format does not have a corresponding TDRA table), the target TDRA table is determined by the terminal device according to the first TDRA table.

The information A is a DCI format that supports scheduling at least two data transmissions.

If the target TDRA table is determined according to the information A, the target TDRA table is a TDRA table corresponding to the first DCI format.

In the embodiments of the present disclosure, when the target TDRA table is determined according to the information A, the target TDRA table is determined by a defined DCI format that supports scheduling a plurality of data transmissions, which is aligned with the manner for determining the TDRA table by DCI that supports scheduling only one data transmission. In the manner of determining the target TDRA table according to the information A, the network device needs to configure a TDRA table corresponding to the first DCI format or predefine the TDRA table corresponding to the first DCI format, so that additional signaling interaction will occur between the terminal device and the network device, resulting in signaling overhead.

In some embodiments, if there is a TDRA table corresponding to the first DCI format, the target TDRA table is determined based on the first DCI format, and the target TDRA table is the TDRA table corresponding to the first DCI format.

If there is the TDRA table corresponding to the first DCI format, the terminal device determines the target TDRA table based on the first DCI format. The TDRA table corresponding to the first DCI format may be understood as a TDRA table for the first DCI format. If the first data transmission is an uplink data transmission, the target TDRA table is the sixth uplink TDRA table. If the first data transmission is a downlink data transmission, the target TDRA table is the fifth downlink TDRA table.

In some embodiments, if the target TDRA table is determined according to the second DCI format, the target TDRA table is a TDRA table corresponding to the second DCI format.

The terminal device determines whether to determine the target TDRA table according to the information A or according to the information B or the information C based on whether there is a TDRA table corresponding to the first DCI format. If there is a TDRA table corresponding to the first DCI format, the target TDRA table is the TDRA table corresponding to the first DCI format. If there is no TDRA table corresponding to the first DCI format, the target TDRA table is determined according to the second DCI format or the first TDRA table.

In some embodiments, the TDRA table corresponding to the first DCI format is configured by the network device or predefined by a protocol.

If the first data transmission is an uplink data transmission, the network device may configure a TDRA table for the first DCI format based on the first configuration information or the second configuration information.

If the first data transmission is a downlink data transmission, the network device may configure a TDRA table for the first DCI format based on the third configuration information or the fourth configuration information.

In the embodiments of the present disclosure, for at least one data transmission, the network device may configure a TDRA table corresponding to the first DCI format for each data transmission or a cell/BWP corresponding to each data transmission, or may predefine the TDRA table corresponding to the first DCI format for each data transmission or the cell/BWP corresponding to each data transmission. The information B is a DCI format that supports scheduling only one data transmission.

The second DCI format is one of at least one third DCI format, and the third DCI format is a DCI format that supports scheduling only one data transmission. The at least one third DCI format includes at least one of DCI format x_0, DCI format x_1, or DCI format x_2, where x is 0 or 1.

In the embodiments of the present disclosure, compared with the approach using a TDRA table for DCI scheduling one data transmission (i.e., the traditional TDRA table), in the case of the target TDRA table being determined according to the second DCI format, the concept of the second DCI format is introduced, and each data transmission in at least one data transmission scheduled by the first DCI is associated with the traditional TDRA table by the second DCI format, which requires little modification to the existing protocol.

In the embodiments of the present disclosure, scenarios in which the target TDRA table is determined according to the second DCI format includes one of the following: scenario A1, the target TDRA table is determined directly according to the second DCI format; scenario A2, if there is no TDRA table corresponding to the first DCI format, the target TDRA table is determined according to the second DCI format. In scenario A1, it is not concerned whether the terminal device is configured with the first DCI format or whether there is the TDRA table corresponding to the first DCI format.

In some embodiments, if the target TDRA table is determined according to the second DCI format, the target TDRA table is a TDRA table corresponding to the second DCI format in the at least one TDRA table.

If the terminal device determines the target TDRA table based on the second DCI format, the terminal device determines the second DCI format and determines the TDRA table corresponding to the second DCI format.

The TDRA table corresponding to the second DCI may be understood as a TDRA table (i.e. applicable TDRA for the second DCI) determined based on a determination table for the second DCI format. It can be understood that the terminal device determines a target determination table for the second DCI format in Determination table 1 to Determination table 5, and determines the target TDRA table corresponding to the first data transmission based on the target determination table.

In some embodiments, if the first data transmission is an uplink data transmission, the second DCI format is one of the following: DCI format 0_0, DCI format 0_1, and DCI format 0_2.

When the second DCI format is DCI format 0_0, the target determination table is Determination table 3. In the embodiments of the present disclosure, the Determination table 3 may include, but is not limited to, the determination table illustrated in Table 3. When the second DCI format is DCI format 0_1, the target determination table is Determination table 4. In the embodiments of the present disclosure, Determination table 4 may include, but is not limited to, the determination table illustrated in Table 4. When the second DCI format is DCI format 0_2, the target determination table is Determination table 5. In the embodiments of the present disclosure, Determination table 5 may include, but is not limited to, the determination table illustrated in Table 5.

In some embodiments, if the first data transmission is a downlink data transmission, the second DCI format is one of the following: DCI format 1_0, DCI format 1_1, and DCI format 1_2.

When the second DCI format is DCI format 1_0 or DCI format 1_1, the target determination table is Determination table 1. In the embodiments of the present disclosure, Determination table 1 may include, but is not limited to, the determination table illustrated in Table 1. When the second DCI format is DCI format 1_2, the target determination table is Determination table 2. In the embodiments of the present disclosure, Determination table 2 may include, but is not limited to, the determination table illustrated in Table 2.

In some embodiments, the manner for determining the second DCI format includes one of the following: determination manner A1, specified by a protocol; determination manner A2, configured by the network device; determination manner A3, determined according to a first rule.

In the determination manner A1, the protocol specifies the second DCI format, and the terminal device determines the target TDRA table directly based on the second DCI format specified by the protocol.

In the determination manner A2, the network device configures the second DCI format for the terminal device. The terminal device determines the target TDRA table based on the configured second DCI format.

In some embodiments of the determination manner A2, the second DCI format is determined based on fifth configuration information configured by the network device, the fifth configuration information being used for configuring at least one first correspondence or at least one second correspondence. The first correspondence is a correspondence between a cell or a BWP and a second DCI format, and the second correspondence is a correspondence among a cell or a BWP, a first row index, and a second DCI format, the first row index being used for determining the time domain resource information corresponding to each of the at least one data transmission.

In some embodiments, the fifth configuration information is used to configure a fifth correspondence, and the fifth correspondence is a relationship between a set of cells or a PUCCH group or a cell group and a second DCI format.

The terminal device receives fifth configuration information configured by the network device, and determines the second DCI format based on the fifth configuration information. Optionally, the terminal device determines the second DCI format according to the at least one first correspondence or the at least one second correspondence or the fifth correspondence configured by the fifth configuration information.

The first correspondence is a correspondence between a cell or a BWP and a second DCI format, and different first correspondences are correspondences between different cells in a first set of cells and second DCI formats corresponding to each of the cells or correspondences between different BWPs in a BWP set and second DCI formats corresponding to each of the BWPs. The first set of cells is a cell combination corresponding to data transmission that may be scheduled by the first DCI or a set of cells that may be scheduled by the first DCI. It can be understood that the first correspondence indicates that the second DCI format is configured per-cell/per-BWP.

The terminal device determines a cell or BWP corresponding to the first data transmission, determines a target first correspondence corresponding to the cell or BWP in at least one first correspondence, and determines a second DCI format in the target first correspondence.

The second correspondence is a correspondence among a cell or a BWP, a first row index, and a second DCI format, and different second correspondences are correspondences between second DCI formats and each of the cells in the first set of cells under different first row indexes, or correspondences between second DCI formats and each of the BWPs in the BWP set under the different first row indexes. It can be understood that the second correspondence indicates that the second DCI format is configured per-cell/per-BWP+ per TDRA table row.

The terminal device determines a first target row index and a cell/BWP corresponding to the first data transmission, determines a target second correspondence corresponding to the cell/BWP under the first target row index in at least one second correspondence, and determines a second DCI format in the target second correspondence.

The fifth correspondence is a correspondence between the set of cells or PUCCH-group or cell group and the second DCI format, that is, the correspondence applies to data transmissions for each of the cells in the set of cells or PUCCH group or cell group. It can be understood that when the terminal device determines the second DCI format based on the fifth correspondence, the data transmissions for each of the cells in the set of cells or the PUCCH group or the cell group correspond to the same second DCI format.

In the determination manner A3, the first rule is constructed based on one or more of the at least one third DCI format.

The terminal device determines a configured third DCI format(s) and determines the second DCI format based on the configured third DCI format(s) and the first rule, thereby determining the target TDRA table according to the second DCI format. The TDRA table corresponding to the second DCI format may be described in the first rule. Thus, when the determination manner of the second DCI format is the determination manner B3, the target TDRA table is determined according to the first rule. The terminal device may be configured with one or more third DCI formats by the network device.

It can be understood that the first rule is used to indicate priorities for each third DCI format among the at least one third DCI format, and the second DCI format is a third DCI format having the highest priority among the third DCI formats configured for the terminal device determined based on the first rule.

In some embodiments, for uplink data transmission, a priority order from high to low of DCI format 0_0, DCI format 0_1, and DCI format 0_2 represented by the first rule is: DCI format 0_1, DCI format 0_0, and DCI format 0_2.

In some embodiments, for downlink data transmission, a priority order from high to low of DCI format 1_0, DCI format 1_1, and DCI format 1_2 represented by the first rule is: DCI format 1_1, DCI format 1_0, and DCI format 1_2.

In some embodiments, the target TDRA table is determined according to a first rule, the first rule including at least one of the following: rule A1, if the terminal device is not configured with DCI format x_1 and DCI format x_0, and the terminal device is configured with DCI format x_2, then the target TDRA table is a TDRA table corresponding to the DCI format x_2; rule A2, if the terminal device is not configured with the DCI format x_1, and the terminal device is configured with the DCI format x_0, then the target TDRA table is a TDRA table corresponding to the DCI format x_0; or rule A3, if the terminal device is configured with the DCI format x_1, then the target TDRA table is a TDRA table corresponding to the DCI format x_1; where x takes a value of 0 or 1.

In the embodiments of the present disclosure, the terminal device being not configured may be understood as that the terminal device is not configured by the network device.

In rule A1, the second DCI format is DCI format x_2.

In rule A2, the second DCI format is the DCI format x_0, and the terminal device may or may not be configured with the DCI format x_2.

In rule A3, the second DCI format is the DCI format x_1, and the terminal device may or may not be configured with the DCI format x_2 and/or the DCI format x_0.

The first rule including at least one of rule A1, rule A2 and rule A3 may be described as illustrated in Table 6, where different rows correspond to different rules.

**Table 6 Example of the first rule**

| DCI format x_2 is configured? | | DCI format x_0 is configured? | | DCI format x_1 is configured? | | Target TDRA table |
|---|---|---|---|---|---|---|
| | Yes | | No | | No | TDRA table for DCI format x_2 |
| | No/Yes | | Yes | | No | TDRA table for DCI format x_0 |
| | No/Yes | | No/Yes | | Yes | TDRA table for DCI format x_1 |

In the embodiments of the present disclosure, a priority order from high to low of the DCI format x_0, the DCI format x_1, and the DCI format x_2 represented by the first rule illustrated in Table 6 may be: the DCI format x_1, the DCI format x_0, the DCI format x_2.

It can be understood that the first rule may include one or more rows in the rules illustrated in Table 6.

If the first data transmission is uplink data transmission, the first rule includes at least one of the following: rule A11, if the terminal device is not configured with DCI format 0_1 and DCI format 0_0 and the terminal device is configured with DCI format 0_2, the target TDRA table is a TDRA table corresponding to DCI format 0_2; rule A12, if the terminal device is not configured with DCI format 0_1 and the terminal device is configured with DCI format 0_0, the target TDRA table is a TDRA table corresponding to DCI format 0_0; rule A13, if the terminal device is configured with the DCI format 0_1, the target TDRA table is the TDRA table corresponding to the DCI format 0_1.

In rule A11, the second DCI format is DCI format 0_2.

In rule A12, the second DCI format is DCI format 0_0. For DCI format 0_2, the network device may or may not configure DCI format 0_2 for the data transmission.

In rule A13, the second DCI format is DCI format 0_1. For DCI format 0_0, the network device may or may not configure DCI format 0_0 for the data transmission. For DCI format 0_2, the network device may or may not configure DCI format 0_2 for the data transmission.

If the first data transmission is downlink data transmission, the first rule includes at least one of the following: rule A21, if the terminal device is not configured with DCI format 1_1 and DCI format 1_0 and the terminal device is configured with DCI format 1_2, the target TDRA table is a TDRA table corresponding to DCI format 1_2; rule A22, if the terminal device is not configured with DCI format 1_1 and the terminal device is configured with DCI format 1_0, the target TDRA table is a TDRA table corresponding to DCI format 1_0; rule A23, if the terminal device is configured with the DCI format 1_1, the target TDRA table is the TDRA table corresponding to the DCI format 1_1.

In rule A21, the second DCI format is DCI format 1_2.

In rule A22, the second DCI format is DCI format 1_0. For DCI format 1_2, the network device may or may not configure DCI format 1_2 for the data transmission.

In rule A23, the second DCI format is DCI format 1_1. For DCI format 1_0, the network device may or may not configure DCI format 1_0 for the data transmission. For DCI format 1_2, the network device may or may not configure DCI format 1_2 for the data transmission.

For the second rule including at least one of the rule A21, the rule A22, and the rule A23, a priority order from high to low of the DCI format 1_0, the DCI format 1_1, and the DCI format 1_2 indicated by the second rule is: DCI format 1_1, DCI format 1_0, and DCI format 1_2.

In some embodiments, the target TDRA table is determined according to a first rule, the first rule including at least one of the following: rule B1, if the terminal device is not configured with DCI format x_1 and DCI format x_2, and the terminal device is configured with DCI format x_0, then the target TDRA table is a TDRA table corresponding to the DCI format x_0; rule B2, if the terminal device is not configured with the DCI format x_1, and the terminal device is configured with the DCI format x_2, then the target TDRA table is a TDRA table corresponding to the DCI format x_2; or rule B3, if the terminal device is configured with the DCI format x_1, then the target TDRA table is a TDRA table corresponding to the DCI format x_1.

The value of x is 0 or 1.

The first rule including at least one of rules B1, B2, and B3 may be described as illustrated in Table 7, where different rows correspond to different rules.

**Table 7 Example of the first rule**

| DCI format x_0 is configured? | | DCI format x_2 is configured? | | DCI format x_1 is configured? | | Target TDRA table |
|---|---|---|---|---|---|---|
| | Yes | | No | | No | TDRA table for DCI format x_0 |
| | No/Yes | | Yes | | No | TDRA table for DCI format x_2 |
| | No/Yes | | No/Yes | | Yes | TDRA table for DCI format x_1 |

In the embodiments of the present disclosure, a priority order from high to low of the DCI format x_0, the DCI format x_1, and the DCI format x_2 represented by the first rule illustrated in Table 7 may be: the DCI format x_1, the DCI format x_2, the DCI format x_0.

It can be understood that the first rule may include one or more rows in the rules illustrated in Table 7.

In some embodiments, the first rule may include at least one of the rules illustrated in Table 8.

**Table 8 Example of the first rule**

| DCI format x_2 is configured? | | DCI format x_1 is configured? | | DCI format x_0 is configured? | | Target TDRA table |
|---|---|---|---|---|---|---|
| | Yes | | No | | No | TDRA table for DCI format x_2 |
| | No/Yes | | Yes | | No | TDRA table for DCI format x_1 |
| | No/Yes | | No/Yes | | Yes | TDRA table for DCI format x_0 |

A priority order from high to low of the DCI format x_0, the DCI format x_1, and the DCI format x_2 represented by the first rule illustrated in Table 8 may be: the DCI format x_0, the DCI format x_1, the DCI format x_2.

In the embodiments of the present disclosure, a priority order from high to low of the DCI format x_0, the DCI format x_1, and the DCI format x_2 represented by the first rule may include, but is not limited to, at least one of the following: the DCI format x_0, the DCI format x_2, the DCI format x_1; the DCI format x_2, the DCI format x_1, the DCI format x_0; and the DCI format x_2, the DCI format x_0, the DCI format x_1.

In the embodiments of the present disclosure, the DCI format x_0, the DCI format x_1, and the DCI format x_2 may be described as description manners illustrated in Table 6 to Table 8 according to different priorities. In the embodiments of the present disclosure, the description of how the second DCI format is determined by the DCI format x_0, the DCI format x_1, and the DCI format x_2 is not limited in any way.

Information C is a TDRA table in at least one TDRA table corresponding to the first data transmission.

In the embodiments of the present disclosure, scenarios in which the target TDRA table is determined according to the first TDRA table includes one of the following: scenario B1, the target TDRA table is determined directly according to the first TDRA table; scenario B2, if there is no TDRA table corresponding to the first DCI format, the target TDRA table is determined according to the first TDRA table. In scenario B1, it is not concerned whether the terminal device is configured with the first DCI format or whether there is any TDRA table corresponding to the first DCI format.

In some embodiments, if the target TDRA table is determined according to the first TDRA table, the target TDRA table is the first TDRA table.

If the terminal device determines the target TDRA table based on the information C, the first TDRA table is used as the target TDRA table, and the time domain resource information corresponding to the first data transmission is determined based on the first TDRA table. In some embodiments, the determination manner of the first TDRA table includes one of the following:
determination manner B 1, specified by a protocol;
determination manner B2, configured by the network device; and
determination manner B3, determined according to a second rule.

In the determination manner B1, the protocol specifies the first TDRA table, and the terminal device determines the first TDRA table specified by the protocol as the target TDRA table directly.

In the determination manner B2, the network device configures the first TDRA table for the terminal device.

In the determination manner B2 and in some embodiments, the first TDRA table is determined based on sixth configuration information configured by the network device, the sixth configuration information being used for configuring at least one third correspondence or at least one fourth correspondence. The third correspondence is a correspondence between a cell or a BWP and a first TDRA table, and the fourth correspondence is a correspondence among a cell or a BWP, a first row index, and a first TDRA table, the first row index being used for determining the time domain resource information corresponding to each of the at least one data transmission.

In some embodiments, the sixth configuration information is used to configure a sixth correspondence, and the sixth correspondence is a relationship between a set of cells or a PUCCH group or a cell group and the first TDRA table.

The terminal device receives the sixth configuration information configured by the network device, and determines the first TDRA table based on the sixth configuration information. Optionally, the terminal device determines the first TDRA table according to the at least one third correspondence or the at least one fourth correspondence or the sixth correspondence configured by the sixth configuration information.

The third correspondence is a correspondence between a cell or a BWP and a first TDRA table, and different third correspondences are correspondences between different cells in a first set of cells and first TDRA tables corresponding to each of the cells or correspondences between different BWPs in a BWP set and first TDRA tables corresponding to each of the BWPs. It can be understood that the third correspondence indicates that the first TDRA table is configured per-cell/per-BWP.

The terminal device determines a cell or BWP corresponding to the first data transmission, determines a target third correspondence corresponding to the cell or BWP in at least one third correspondence, and determines a first TDRA table in the target third correspondence.

The fourth correspondence is a correspondence among a cell or a BWP, a first row index, and a first TDRA table, and different fourth correspondences indicate that first TDRA tables correspond to each of the cells in the first set of cells under different first row indexes, or that first TDRA tables correspond to each of the BWPs in the BWP set under the different first row indexes. It can be understood that the fourth correspondence indicates that the first TDRA table is configured per-cell/per-BWP+ per TDRA table row.

The terminal device determines a first target row index and a cell/BWP corresponding to the first data transmission, determines a target fourth correspondence corresponding to the cell/BWP under the first target row index in at least one fourth correspondence, and determines a first TDRA table in the target fourth correspondence.

The sixth correspondence is a correspondence between the set of cells or PUCCH group or cell group and the first TDRA table, that is, the correspondence applies to data transmissions of each of the cells in the set of cells or PUCCH group or cell group. It can be understood that when the terminal device determines the first TDRA table based on the sixth correspondence, data transmissions for each of the cells in the set of cells or the PUCCH group or the cell group correspond to the same first TDRA table.

In the determination manner B3, the second rule is constructed based on one or more of the at least one TDRA table.

The terminal device determines a configured TDRA table(s) in the terminal device, determines the first TDRA table based on the configured TDRA table(s) and the second rule, and the determined first TDRA table is used as the target TDRA table. Thus, when the determination manner of the first TDRA table is the determination manner B3, the target TDRA table is determined according to the second rule. The terminal device may be configured with one or more TDRA tables by the network device.

It can be understood that the second rule is used to indicate priorities for each TDRA table among the at least one TDRA table, and the first TDRA table is a TDRA table having the highest priority among the TDRA tables configured for the terminal device determined based on the second rule.

In the embodiments of the present disclosure, in the case of the target TDRA table being determined based on the information C, compared with the approach using a traditional TDRA table, the determination manner of the TDRA table through the second rule is relatively aligned with a determination manner of the traditional TDRA table, and there is no need to introduce an additional concept in the determination manner of the TDRA table through the second rule, but the second rule may be understood as a newly defined TDRA determination table. As a result, determining the target TDRA based on the information C requires much modification to the existing protocol.

In the embodiments of the present disclosure, a priority indicated by the second rule for uplink data transmission may satisfy at least one of the following conditions: condition A1, a priority of an uplink TDRA table (i.e., a second uplink TDRA table) configured by the terminal specific configuration information is higher than a priority of an uplink TDRA table (i.e., a fourth uplink TDRA table) configured by the cell specific configuration information; condition A2, a priority of an uplink TDRA table (i.e., a first uplink TDRA table) for DCI format 0_1 is higher than a priority of an uplink TDRA table (i.e., a third uplink TDRA table) for DCI format 0_2; condition A3: a default uplink TDRA table (i.e., a fifth uplink TDRA table) has the lowest priority.

In some embodiments, a priority order from high to low of the first uplink TDRA table, the second uplink TDRA table, the third uplink TDRA table, and the fourth uplink TDRA table represented by the second rule is: the second uplink TDRA table, the third uplink TDRA table, the first uplink TDRA table, the fourth uplink TDRA table. At this time, the condition A1 is satisfied.

In some embodiments, a priority order from high to low of the first uplink TDRA table, the second uplink TDRA table, the third uplink TDRA table, the fourth uplink TDRA table and the fifth uplink TDRA table represented by the second rule is: the first uplink TDRA table, the second uplink TDRA table, the third uplink TDRA table, the fourth uplink TDRA table, the fifth uplink TDRA table. At this time, the first rule satisfies the condition A1, the condition A2, and the condition A3.

In some embodiments, a priority order from high to low of the first uplink TDRA table, the second uplink TDRA table, the third uplink TDRA table, the fourth uplink TDRA table and the fifth uplink TDRA table represented by the second rule is: the fourth uplink TDRA table, the first uplink TDRA table, the third uplink TDRA table, the second uplink TDRA table, the fifth uplink TDRA table. At this time, the first rule satisfies the condition A2, and the condition A3.

In some embodiments, a priority order from high to low of the first uplink TDRA table, the second uplink TDRA table, the third uplink TDRA table, the fourth uplink TDRA table and the fifth uplink TDRA table represented by the second rule is: the fourth uplink TDRA table, the second uplink TDRA table, the third uplink TDRA table, the first uplink TDRA table, the fifth uplink TDRA table. At this time, the first rule satisfies the condition A3.

In some embodiments, a priority order from high to low of the first uplink TDRA table, the second uplink TDRA table, the third uplink TDRA table, the fourth uplink TDRA table and the fifth uplink TDRA table represented by the second rule is: the first uplink TDRA table, the third uplink TDRA table, the second uplink TDRA table, the fourth uplink TDRA table, the fifth uplink TDRA table. At this time, the first rule satisfies the condition A1, the condition A2, and the condition A3.

In the embodiments of the present disclosure, a priority indicated by the second rule for downlink data transmission may satisfy at least one of the following conditions: condition B1, a priority of a downlink TDRA table (i.e., a first downlink TDRA table) configured by the terminal specific configuration information is higher than a priority of a downlink TDRA table (i.e., a second downlink TDRA table) for DCI format 1_2; condition B2, a priority of a downlink TDRA table (i.e., a first downlink TDRA table) configured by the terminal specific configuration information is higher than a priority of a downlink TDRA table (i.e., a third downlink TDRA table) configured by the cell specific configuration information; condition B3: a default downlink TDRA table (i.e., a fourth downlink TDRA table) has the lowest priority.

In some embodiments, a priority order from high to low of the first downlink TDRA table, the second downlink TDRA table, the third downlink TDRA table, and the fourth downlink TDRA table represented by the second rule is: the second uplink TDRA table, the third uplink TDRA table, the first downlink TDRA table, the fourth uplink TDRA table. At this time, the second rule satisfies the condition B3.

In some embodiments, a priority order from high to low of the first downlink TDRA table, the second downlink TDRA table, the third downlink TDRA table, and the fourth downlink TDRA table represented by the second rule is: the second uplink TDRA table, the first uplink TDRA table, the third downlink TDRA table, the fourth uplink TDRA table. At this time, the second rule satisfies the condition B2 and the condition B3.

In some embodiments, a priority order from high to low of the first downlink TDRA table, the second downlink TDRA table, the third downlink TDRA table, and the fourth downlink TDRA table represented by the second rule is: the third uplink TDRA table, the first uplink TDRA table, the second downlink TDRA table, the fourth uplink TDRA table. At this time, the second rule satisfies the condition B1 and the condition B3.

In some embodiments, a priority order from high to low of the first downlink TDRA table, the second downlink TDRA table, the third downlink TDRA table, and the fourth downlink TDRA table represented by the second rule is: the first uplink TDRA table, the second uplink TDRA table, the third downlink TDRA table, the fourth uplink TDRA table. At this time, the second rule satisfies the condition B1, the condition B2 and the condition B3.

In some embodiments, a priority order from high to low of the first downlink TDRA table, the second downlink TDRA table, the third downlink TDRA table, and the fourth downlink TDRA table represented by the second rule is: the first uplink TDRA table, the third uplink TDRA table, the second downlink TDRA table, the fourth uplink TDRA table. At this time, the second rule satisfies the condition B1, the condition B2 and the condition B3.

In some embodiments, the target TDRA table is determined according to a second rule, and if the first data transmission is an uplink data transmission, the second rule includes at least one of the following: rule C1, if the terminal device is not configured with a first uplink TDRA table, a second uplink TDRA table, a third uplink TDRA table and a fourth uplink TDRA table, the target TDRA table is a fifth uplink TDRA table; rule C2, if the terminal device is not configured with the first uplink TDRA table, the second uplink TDRA table and the third uplink TDRA table, and the terminal device is configured with the fourth uplink TDRA table, then the target TDRA table is the fourth uplink TDRA table; rule C3, if the terminal device is not configured with the first uplink TDRA table and the second uplink TDRA table, and the terminal device is configured with the third uplink TDRA table, then the target TDRA table is the third uplink TDRA table; rule C4, if the terminal device is not configured with the first uplink TDRA table, and the terminal device is configured with the second uplink TDRA table, then the target TDRA table is the second uplink TDRA table; or rule C5, if the terminal device is configured with the first uplink TDRA table, the target TDRA table is the first uplink TDRA table.

In rule C1, the first TDRA table is the fifth uplink TDRA table.

In rule C2, the first TDRA table is the fourth uplink TDRA table.

In rule C3, the first TDRA table is the third uplink TDRA table. For the fourth uplink TDRA table, the network device may or may not configure the fourth uplink TDRA table for the first data transmission.

In rule C4, the first TDRA table is the second uplink TDRA table. For the third uplink TDRA table, the network device may or may not configure the third uplink TDRA table for the first data transmission. For the fourth uplink TDRA table, the network device may or may not configure the fourth uplink TDRA table for the first data transmission.

In rule C5, the first TDRA table is the first uplink TDRA table. For the second uplink TDRA table, the network device may or may not configure the second uplink TDRA table for the first data transmission. For the third uplink TDRA table, the network device may or may not configure the third uplink TDRA table for the first data transmission. For the fourth uplink TDRA table, the network device may or may not configure the fourth uplink TDRA table for the first data transmission.

It can be understood that for the second rule including at least one of the rule C1, the rule C2, the rule C3, the rule C4, and the rule C5, a priority order from high to low of the first uplink TDRA table, the second uplink TDRA table, the third uplink TDRA table, the fourth uplink TDRA table, and the fifth uplink TDRA table indicated by the second rule is: the first uplink TDRA table, the second uplink TDRA table, the third uplink TDRA table, the fourth uplink TDRA table, the fifth uplink TDRA table. The second rule may be described as illustrated in Table 9, where the second rule may include at least one row in Table 9, and different rows correspond to different rules.

**Table 9 Example of the second rule**

| Whether the fourth uplink TDRA table is configured | Whether the third uplink TDRA table is configured | Whether the second uplink TDRA table is configured | Whether the first uplink TDRA table is configured | Target TDRA table |
|---|---|---|---|---|
| No | No | No | No | Fifth uplink TDRA table |
| Yes | No | No | No | Fourth uplink TDRA table |
| No/Yes | Yes | No | No | Third uplink TDRA table |
| No/Yes | No/Yes | Yes | No | Second uplink TDRA table |
| No/Yes | No/Yes | No/Yes | Yes | First uplink TDRA table |

In a practical application, since the first uplink TDRA table and the third uplink TDRA table will not be configured simultaneously with the second uplink TDRA table, the second rule illustrated in Table 9 may be simplified as Table 10 and Table 11.

**Table 10 Example of the second rule**

| Whether the fourth uplink TDRA table is configured | | Whether the third uplink TDRA table is configured | | Whether the first uplink TDRA table is configured | Target TDRA table |
|---|---|---|---|---|---|
| | No | | No | No | Fifth uplink TDRA table |
| | Yes | | No | No | Fourth uplink TDRA table |
| | No/Yes | | Yes | No | Third uplink TDRA table |
| | No/Yes | | No/Yes | Yes | First uplink TDRA table |

**Table 11 Example of the second rule**

| Whether the fourth uplink TDRA table is configured | Whether the second uplink TDRA table is configured | Target TDRA table |
|---|---|---|
| | | |
| No | No | Fifth uplink TDRA table |
| Yes | No | Fourth uplink TDRA table |
| No/Yes | Yes | Second uplink TDRA table |

Table 10 illustrates a second rule including a first uplink TDRA table, a third uplink TDRA table, a fourth TDRA table, and a fifth TDRA table, and Table 11 illustrates a second rule including a second uplink TDRA table, a fourth uplink TDRA table, and a fifth TDRA table.

In the embodiments of the present disclosure, the second rule including the first uplink TDRA table, the third uplink TDRA table, and the second uplink TDRA table at the same time may be simplified by referring to a manner of simplifying Table 9 into Table 10 and Table 11, and other simplifications of the second rule will not be described repeatedly herein.

In some embodiments, the target TDRA table is determined according to a second rule, and if the first data transmission is an uplink data transmission, the second rule includes at least one of the following: rule D1, if the terminal device is not configured with a second uplink TDRA table, a first uplink TDRA table, a third uplink TDRA table and a fourth uplink TDRA table, the target TDRA table is a fifth uplink TDRA table; rule D2, if the terminal device is not configured with the second uplink TDRA table, the first uplink TDRA table, and the third uplink TDRA table, and the terminal device is configured with the fourth uplink TDRA table, then the target TDRA table is the fourth uplink TDRA table; rule D3, if the terminal device is not configured with the second uplink TDRA table and the first uplink TDRA table, and the terminal device is configured with the third uplink TDRA table, then the target TDRA table is the third uplink TDRA table; rule D4, if the terminal device is not configured with the second uplink TDRA table, and the terminal device is configured with the first uplink TDRA table, then the target TDRA table is the first uplink TDRA table; or rule D5, if the terminal device is configured with the second uplink TDRA table, the target TDRA table is the second uplink TDRA table.

In rule D1, the first TDRA table is the fifth uplink TDRA table.

In rule D2, the first TDRA table is the fourth uplink TDRA table.

In rule D3, the first TDRA table is the third uplink TDRA table. For the fourth uplink TDRA table, the network device may or may not configure the fourth uplink TDRA table for the first data transmission.

In rule D4, the first TDRA table is the first uplink TDRA table. For the third uplink TDRA table, the network device may or may not configure the third uplink TDRA table for the first data transmission. For the fourth uplink TDRA table, the network device may or may not configure the fourth uplink TDRA table for the first data transmission.

In rule D5, the first TDRA table is the second uplink TDRA table. For the first uplink TDRA table, the network device may or may not configure the first uplink TDRA table for the first data transmission. For the third uplink TDRA table, the network device may or may not configure the third uplink TDRA table for the first data transmission. For the fourth uplink TDRA table, the network device may or may not configure the fourth uplink TDRA table for the first data transmission.

It can be understood that for the second rule including at least one of the rule D1, the rule D2, the rule D3, the rule D4, and the rule D5, a priority order from high to low of the first uplink TDRA table, the second uplink TDRA table, the third uplink TDRA table, the fourth uplink TDRA table, and the fifth uplink TDRA table indicated by the second rule is: the second uplink TDRA table, the first uplink TDRA table, the third uplink TDRA table, the fourth uplink TDRA table, the fifth uplink TDRA table. The second rule may be described as illustrated in Table 12, where the second rule may include at least one row in Table 12, and different rows correspond to different rules.

**Table 12 Example of the second rule**

| Whether the fourth uplink TDRA table is configured | | Whether the third uplink TDRA table is configured | | Whether the first uplink TDRA table is configured | | Whether the second uplink TDRA table is configured | Target TDRA table |
|---|---|---|---|---|---|---|---|
| | No | | No | | No | No | Fifth uplink TDRA table |
| | Yes | | No | | No | No | Fourth uplink TDRA table |
| | No/Yes | | Yes | | No | No | Third uplink TDRA table |
| | No/Yes | | No/Yes | | Yes | No | First uplink TDRA table |
| | No/Yes | | No/Yes | | No/Yes | Yes | Second uplink TDRA table |

In some embodiments, the target TDRA table is determined according to a second rule, and if the first data transmission is an uplink data transmission, the second rule includes at least one of the following: rule E1, if the terminal device is not configured with a first uplink TDRA table, a second uplink TDRA table, a fourth uplink TDRA table and a third uplink TDRA table, then the target TDRA table is a fifth uplink TDRA table; rule E2, if the terminal device is not configured with the first uplink TDRA table, the second uplink TDRA table and the fourth uplink TDRA table, and the terminal device is configured with the third uplink TDRA table, then the target TDRA table is the third uplink TDRA table; rule E3, if the terminal device is not configured with the first uplink TDRA table and the second uplink TDRA table, and the terminal device is configured with the fourth uplink TDRA table, then the target TDRA table is the fourth uplink TDRA table; rule E4, if the terminal device is not configured with the first uplink TDRA table, and the terminal device is configured with the second uplink TDRA table, then the target TDRA table is the second uplink TDRA table; or rule E5, if the terminal device is not configured with the first uplink TDRA table, the target TDRA table is the first uplink TDRA table.

In rule E1, the first TDRA table is the fifth uplink TDRA table.

In rule E2, the first TDRA table is the third uplink TDRA table.

In rule E3, the first TDRA table is the fourth uplink TDRA table. For the third uplink TDRA table, the network device may or may not configure the third uplink TDRA table for the first data transmission.

In rule E4, the first TDRA table is the second uplink TDRA table. For the fourth uplink TDRA table, the network device may or may not configure the fourth uplink TDRA table for the first data transmission. For the third uplink TDRA table, the network device may or may not configure the third uplink TDRA table for the first data transmission.

In rule E5, the first TDRA table is the first uplink TDRA table. For the second uplink TDRA table, the network device may or may not configure the second uplink TDRA table for the first data transmission. For the fourth uplink TDRA table, the network device may or may not configure the fourth uplink TDRA table for the first data transmission. For the third uplink TDRA table, the network device may or may not configure the third uplink TDRA table for the first data transmission.

It can be understood that for the second rule including at least one of the rule E1, the rule E2, the rule E3, the rule E4, and the rule E5, a priority order from high to low of the first uplink TDRA table, the second uplink TDRA table, the third uplink TDRA table, the fourth uplink TDRA table, and the fifth uplink TDRA table indicated by the second rule is: the first uplink TDRA table, the second uplink TDRA table, the fourth uplink TDRA table, the third uplink TDRA table, the fifth uplink TDRA table. The second rule may be described as illustrated in Table 13, where the second rule may include at least one row in Table 13, and different rows correspond to different rules.

**Table 13 Example of the second rule**

| Whether the third uplink TDRA table is configured | | Whether the fourth uplink TDRA table is configured | | Whether the second uplink TDRA table is configured | | Whether the first uplink TDRA table is configured | Target TDRA table |
|---|---|---|---|---|---|---|---|
| | No | | No | | No | No | Fifth uplink TDRA table |
| | Yes | | No | | No | No | Third uplink TDRA table |
| | No/Yes | | Yes | | No | No | Fourth uplink TDRA table |
| | No/Yes | | No/Yes | | Yes | No | Second uplink TDRA table |
| | No/Yes | | No/Yes | | No/Yes | Yes | First uplink TDRA table |

In some embodiments, the target TDRA table is determined according to a second rule, and if the first data transmission is an uplink data transmission, the second rule includes at least one of the following:

rule F1, if the terminal device is not configured with a first uplink TDRA table, a third uplink TDRA table, a second uplink TDRA table and a fourth uplink TDRA table, the target TDRA table is a fifth uplink TDRA table; rule F2, if the terminal device is not configured with the first uplink TDRA table, the third uplink TDRA table, and the second uplink TDRA table, and the terminal device is configured with the fourth uplink TDRA table, then the target TDRA table is the fourth uplink TDRA table; rule F3, if the terminal device is not configured with the first uplink TDRA table and the third uplink TDRA table, and the terminal device is configured with the second uplink TDRA table, then the target TDRA table is the second uplink TDRA table; rule F4, if the terminal device is not configured with the first uplink TDRA table, and the terminal device is configured with the third uplink TDRA table, then the target TDRA table is the third uplink TDRA table; or rule F5, if the terminal device is configured with the first uplink TDRA table, the target TDRA table is the first uplink TDRA table.

In rule F1, the first TDRA table is the fifth uplink TDRA table.

In rule F2, the first TDRA table is the fourth uplink TDRA table.

In rule F3, the first TDRA table is the second uplink TDRA table. For the fourth uplink TDRA table, the network device may or may not configure the fourth uplink TDRA table for the first data transmission.

In rule F4, the first TDRA table is the third uplink TDRA table. For the second uplink TDRA table, the network device may or may not configure the second uplink TDRA table for the first data transmission. For the fourth uplink TDRA table, the network device may or may not configure the fourth uplink TDRA table for the first data transmission.

In rule F5, the first TDRA table is the first uplink TDRA table. For the third uplink TDRA table, the network device may or may not configure the third uplink TDRA table for the first data transmission. For the second uplink TDRA table, the network device may or may not configure the second uplink TDRA table for the first data transmission. For the fourth uplink TDRA table, the network device may or may not configure the fourth uplink TDRA table for the first data transmission.

It can be understood that for the second rule including at least one of the rule F1, the rule F2, the rule F3, the rule F4, and the rule F5, a priority order from high to low of the first uplink TDRA table, the second uplink TDRA table, the third uplink TDRA table, the fourth uplink TDRA table, and the fifth uplink TDRA table indicated by the second rule is: the first uplink TDRA table, the third uplink TDRA table, the second uplink TDRA table, the fourth uplink TDRA table, the fifth uplink TDRA table. The second rule may be described as illustrated in Table 14, where the second rule may include at least one row in Table 14, and different rows correspond to different rules.

**Table 14 Example of the second rule**

| Whether the fourth uplink TDRA table is configured | | Whether the second uplink TDRA table is configured | | Whether the third uplink TDRA table is configured | | Whether the first uplink TDRA table is configured | Target TDRA table |
|---|---|---|---|---|---|---|---|
| | No | | No | | No | No | Fifth uplink TDRA table |
| | Yes | | No | | No | No | Fourth uplink TDRA table |
| | No/Yes | | Yes | | No | No | Second uplink TDRA table |
| | No/Yes | | No/Yes | | Yes | No | Third uplink TDRA table |
| | No/Yes | | No/Yes | | No/Yes | Yes | First uplink TDRA table |

In the embodiments of the present disclosure, the target TDRA table is determined according to the second rule, and if the first data transmission is an uplink data transmission, the second rule may be expressed as, but is not limited to, the second rules illustrated in Table 15 and Table 16.

**Table 15 Example of the second rule**

| Whether the third uplink TDRA table is configured | | Whether the first uplink TDRA table is configured | | Whether the fourth uplink TDRA table is configured | | Whether the second uplink TDRA table is configured | Target TDRA table |
|---|---|---|---|---|---|---|---|
| | No | | No | | No | No | Fifth uplink TDRA table |
| | Yes | | No | | No | No | Third uplink TDRA table |
| | No/Yes | | Yes | | No | No | First uplink TDRA table |
| | No/Yes | | No/Yes | | Yes | No | Fourth uplink TDRA table |
| | No/Yes | | No/Yes | | No/Yes | Yes | Second uplink TDRA table |

**Table 16 Example of the second rule**

| Whether the third uplink TDRA table is configured | Whether the first uplink TDRA table is configured | Whether the second uplink TDRA table is configured | Whether the fourth uplink TDRA table is configured | Target TDRA table |
|---|---|---|---|---|
| No | No | No | No | Fifth uplink TDRA table |
| Yes | No | No | No | Third uplink TDRA table |
| No/Yes | Yes | No | No | First uplink TDRA table |
| No/Yes | No/Yes | Yes | No | Second uplink TDRA table |
| No/Yes | No/Yes | No/Yes | Yes | Fourth uplink TDRA table |

In the embodiments of the present disclosure, if the first data transmission is an uplink data transmission, a priority order of the first uplink TDRA table, the second uplink TDRA table, the third uplink TDRA table, the fourth uplink TDRA table, and the fifth uplink TDRA table indicated by the second rule includes but is not limited to the priority orders illustrated in Table 9 to Table 16, and the priority order described in the second rule may be any sorting combination of the first uplink TDRA table, the second uplink TDRA table, the third uplink TDRA table, the fourth uplink TDRA table, and the fifth uplink TDRA table.

In some embodiments, the target TDRA table is determined according to a second rule, and if the first data transmission is a downlink data transmission, the second rule includes at least one of the following: rule G1, if the terminal device is not configured with a first downlink TDRA table, a second downlink TDRA table and a third downlink TDRA table, the target TDRA table is a fourth downlink TDRA table; rule G2, if the terminal device is not configured with the first downlink TDRA table and the second downlink TDRA table, and the terminal device is configured with the third downlink TDRA table, then the target TDRA table is the third downlink TDRA table; rule G3, if the terminal device is not configured with the first downlink TDRA table, and the terminal device is configured with the second downlink TDRA table, then the target TDRA table is the second downlink TDRA table; or rule G4, if the terminal device is configured with the first downlink TDRA table, then the target TDRA table is the first downlink TDRA table. In rule G1, the first TDRA table is the fourth downlink TDRA table.

In rule G2, the first TDRA table is the third downlink TDRA table.

In rule G3, the first TDRA table is the second downlink TDRA table. For the third downlink TDRA table, the network device may or may not configure the third downlink TDRA table for the first data transmission.

In rule G4, the first TDRA table is the first downlink TDRA table. For the second downlink TDRA table, the network device may or may not configure the second downlink TDRA table for the first data transmission. For the third downlink TDRA table, the network device may or may not configure the third downlink TDRA table for the first data transmission.

For the second rule including at least one of the rule G1, the rule G2, the rule G3, and the rule G4, a priority order from high to low of the first downlink TDRA table, the second downlink TDRA table, the third downlink TDRA table, and the fourth uplink TDRA table indicated by the second rule is: the first downlink TDRA table, the second downlink TDRA table, the third downlink TDRA table, the fourth downlink TDRA table. The second rule may be described as illustrated in Table 17, where the second rule may include at least one row in Table 17, and different rows correspond to different rules.

**Table 17 Example of the second rule**

| Whether the third downlink TDRA table is configured | | Whether the second downlink TDRA table is configured | | Whether the first downlink TDRA table is configured | Target TDRA table |
|---|---|---|---|---|---|
| | No | | No | No | Fourth downlink TDRA table |
| | Yes | | No | No | Third downlink TDRA table |
| | No/Yes | | Yes | No | Second downlink TDRA table |
| | No/Yes | | No/Yes | Yes | First downlink TDRA table |

In some embodiments, the target TDRA table is determined according to a second rule, and if the first data transmission is a downlink data transmission, the second rule includes at least one of the following: rule H1, if the terminal device is not configured with a first downlink TDRA table, a second downlink TDRA table and a third downlink TDRA table, the target TDRA table is the fourth downlink TDRA table; rule H2, if the terminal device is not configured with the first downlink TDRA table and the third downlink TDRA table, and the terminal device is configured with the second downlink TDRA table, then the target TDRA table is the second downlink TDRA table; rule H3, if the terminal device is not configured with the first downlink TDRA table, and the terminal device is configured with the third downlink TDRA table, then the target TDRA table is the third downlink TDRA table; or rule H4, if the terminal device is configured with the first downlink TDRA table, the target TDRA table is the first downlink TDRA table.

In rule H1, the first TDRA table is the fourth downlink TDRA table.

In rule H2, the first TDRA table is the second downlink TDRA table.

In rule H3, the first TDRA table is the third downlink TDRA table. For the second downlink TDRA table, the network device may or may not configure the second downlink TDRA table for the first data transmission.

In rule H4, the first TDRA table is the first downlink TDRA table. For the third downlink TDRA table, the network device may or may not configure the third downlink TDRA table for the first data transmission. For the second downlink TDRA table, the network device may or may not configure the second downlink TDRA table for the first data transmission.

It can be understood that for the second rule including at least one of the rule H1, the rule H2, the rule H3, and the rule H4, a priority order from high to low of the first downlink TDRA table, the second downlink TDRA table, the third downlink TDRA table, and the fourth uplink TDRA table indicated by the second rule is: the first downlink TDRA table, the third downlink TDRA table, the second downlink TDRA table, the fourth downlink TDRA table. The second rule may be described as illustrated in Table 18, where the second rule may include at least one row in Table 18, and different rows correspond to different rules.

**Table 18 Example of the second rule**

| Whether the second downlink TDRA table is configured | | Whether the third downlink TDRA table is configured | | Whether the first downlink TDRA table is configured | Target TDRA table |
|---|---|---|---|---|---|
| | No | | No | No | Fourth downlink TDRA table |
| | Yes | | No | No | Second downlink TDRA table |
| | No/Yes | | Yes | No | Third downlink TDRA table |
| | No/Yes | | No/Yes | Yes | First downlink TDRA table |

In the embodiments of the present disclosure, the target TDRA table is determined according to the second rule, and if the first data transmission is a downlink data transmission, the second rule may be expressed as, but is not limited to, the second rules illustrated in Table 19 to Table 22.

**Table 19 Example of the second rule**

| Whether the second downlink TDRA table is configured | | Whether the first downlink TDRA table is configured | | Whether the third downlink TDRA table is configured | Target TDRA table |
|---|---|---|---|---|---|
| | No | | No | No | Fourth downlink TDRA table |
| | Yes | | No | No | Second downlink TDRA table |
| | No/Yes | | Yes | No | First downlink TDRA table |
| | No/Yes | | No/Yes | Yes | Third downlink TDRA table |

**Table 20 Example of the second rule**

| Whether the first downlink TDRA table is configured | | Whether the second downlink TDRA table is configured | | Whether the third downlink TDRA table is configured | Target TDRA table |
|---|---|---|---|---|---|
| | No | | No | No | Fourth downlink TDRA table |
| | Yes | | No | No | First downlink TDRA table |
| | No/Yes | | Yes | No | Second downlink TDRA table |
| | No/Yes | | No/Yes | Yes | Third downlink TDRA table |

**Table 21 Example of the second rule**

| Whether the third downlink TDRA table is configured | | Whether the first downlink TDRA table is configured | | Whether the second downlink TDRA table is configured | Target TDRA table |
|---|---|---|---|---|---|
| | No | | No | No | Fourth downlink TDRA table |
| | Yes | | No | No | Third downlink TDRA table |
| | No/Yes | | Yes | No | First downlink TDRA table |
| | No/Yes | | No/Yes | Yes | Second downlink TDRA table |

**Table 22 Example of the second rule**

| Whether the first downlink TDRA table is configured | | Whether the third downlink TDRA table is configured | | Whether the second downlink TDRA table is configured | Target TDRA table |
|---|---|---|---|---|---|
| | No | | No | No | Fourth downlink TDRA table |
| | Yes | | No | No | First downlink TDRA table |
| | No/Yes | | Yes | No | Third downlink TDRA table |
| | No/Yes | | No/Yes | Yes | Second downlink TDRA table |

In the embodiments of the present disclosure, if the first data transmission is a downlink data transmission, a priority order of the first downlink TDRA table, the second downlink TDRA table, the third downlink TDRA table, and the fourth downlink TDRA table indicated by the second rule includes, but is not limited to, the priority orders illustrated in Table 17 to Table 22, and the priority order described in the second rule may be any sorting combination of the first downlink TDRA table, the second downlink TDRA table, and the third downlink TDRA table, and the fourth downlink TDRA table.

In some embodiments, the at least one data transmission corresponds to at least one cell.

The number of data transmissions included in the at least one data transmission is N, the number of cells included in the at least one cell is M, and N is greater than or equal to M. If N is equal to M, one data transmission corresponds to one cell, and different data transmissions correspond to different cells. If N is greater than M, some or all data transmissions correspond to the same cell.

In some embodiments, an indication manner that the first field indicates the time domain resource information corresponding to each of the at least one data transmission includes at least one of the following:
a first indication manner, a value of the first field is used for determining a first target row index, and the time domain resource information corresponding to the first data transmission is determined according to a TDRA row corresponding to a second target row index in the target TDRA table, where the second target row index is determined according to the first target row index and a second TDRA table, each row in the second TDRA table indicates at least time domain resource information corresponding to each of the at least one data transmission.
a second indication manner, a value of the first field is used for determining a third target row index, and the time domain resource information corresponding to each of the at least one data transmission is determined according to a TDRA row corresponding to the third target row index in a corresponding target TDRA table.

In the first indication manner, the value of the first field is used to determine the first target row index. In some embodiments, the value of the first field is a first target row index. In some embodiments, the value of the first field plus 1 is the first target row index. The manner for determining the first target row index by the value of the first field is not limited by the embodiments of the present disclosure.

The first target row index determined by the first field is used to determine a second target row index corresponding to each data transmission, and a TDRA row corresponding to the second target row index in the target TDRA table is determined as a target TDRA row.

The second target row index is determined according to the first target row index and a second TDRA table, and the second TDRA table includes time domain resource information corresponding to each of the at least one data transmission scheduled by the first DCI. The time domain resource information corresponding to each of the at least one data transmission is indicated by the second target row index. It can be understood that an index of each row in the second TDRA table is the first row index, and different rows correspond to different first row indexes, and different rows include second row indexes corresponding to each of the at least one data transmission. A row corresponding to the first target row index in the second TDRA table includes a second target row index corresponding to each of the at least one data transmission.

The second TDRA table may be understood as a joint TDRA table.

It can be understood that in the first indication manner, the first target row index is associated with the second TDRA table, and the second target row index for the target TDRA table of each data transmission is determined based on the first target row index in the second TDRA table.

For the first data transmission, a TDRA row in which the second target row index in the target TDRA table is located is the target TDRA row corresponding to the first data transmission.

In the second indication manner, the value of the first field is used to determine the third target row index. In some embodiments, the value of the first field is a third target row index. In some embodiments, the value of the first field plus 1 is the third target row index. The manner for determining the third target row index by the value of the first field is not limited by the embodiments of the present disclosure.

The third target row index is applicable to different data transmissions, and a TDRA row identified by the third target row index in the target TDRA table corresponding to each of the at least one data transmission is a target TDRA row corresponding to each data transmission.

In some embodiments, when the first DCI schedules data transmission 1 and data transmission 2, if the third target row index determined by the first field in the first DCI is 1, then time domain resource information included in a TDRA row having a row index 1 in the target TDRA table corresponding to data transmission 1 is time domain resource information corresponding to data transmission 1, and time domain resource information included in the TDRA row having the row index 1 in the target TDRA table corresponding to data transmission 2 is time domain resource information corresponding to data transmission 2.

In some embodiments, each of the at least one data transmission does not support repetition.

If a data transmission scheduled by the first DCI does not support repetition, at least one of the following first parameters is not applicable to the data transmission scheduled by the first DCI: an aggregation factor of PUSCH (pusch-AggregationFactor), an aggregation factor of PDSCH (pdsch-AggregationFactor), and a number of repetitions (numberOfRepetitions).

The data transmission scheduled by the first DCI does not support repetition, which may be understood as: the number of repetitions of each of the at least one data transmission scheduled by the first DCI is 1, or the terminal device does not expect a multi-carrier scheduling and a first parameter(s) to be configured or enabled at the same time.

It can be understood that the scheme in which each of the at least one data transmission scheduled by the first DCI does not support repetition may be implemented independently with the scheme in which the first field in the first DCI determines the time domain resource information for each of the at least one data transmission, and there is no dependency relationship between the two schemes.

The method for indicating the time domain resource provided by the embodiments of the present disclosure will be further described by taking an example where different data transmissions scheduled by DCI correspond to different cells.

A terminal device receives first DCI (i.e., DCI format 0_X/1_X), the first DCI is used for scheduling N data transmissions (corresponding to N cells), the first DCI includes a time domain resource assignment field, and the time domain resource assignment field is used for indicating time domain resources occupied by the N data transmissions.

A value of the time domain resource assignment field is used to determine a row index of at least one time domain resource assignment table, the at least one time domain resource assignment table including at least one of the following:
a second time domain resource assignment table, i.e., a joint TDRA table. Each row of a first time domain resource assignment table includes at least time domain resource information corresponding to the N data transmissions/N cells, and the time domain resource assignment information corresponding to each data transmission/cell in the N data transmissions/N cells is indicated by an index (i.e., a first target row index) linked to the target time domain resource assignment table corresponding to the data transmission/cell; and
[0291] a target time domain resource assignment table corresponding to each data transmission/cell among the N data transmissions/cells.

The target time domain resource assignment table corresponding to each data transmission/cell among the N data transmissions/cells is determined according to the following manner 1, manner 2, manner 3.

In manner 1, the target time domain resource assignment table corresponding to each data transmission/cell is determined according to a time domain resource assignment table corresponding to the second DCI format in time domain resource assignment tables corresponding to the data transmission/cell:
a) if the data transmission is PDSCH, the second DCI format is one of the following: DCI format 1_0, DCI format 1_1, and DCI format 1_2. The second DCI format may be determined by the following manners:
   i. specified by a protocol;
   ii. configured by a network side, and the configuration may be per-cell configuration, or per-cell + per TDRA table row configuration;
   iii. determined according to a certain rule, i.e., the first rule. For example, if only one DCI format is configured, the second DCI format is determined as the DCI format; if a plurality of DCI formats are configured, the second DCI format is determined according to one of at least one priority order, where the at least one priority order is any sorting combination of DCI format 1_0, DCI format 1_1, and DCI format 1_2.
b) if the data transmission is PUSCH, the second DCI format is one of the following: DCI format 0_0, DCI format 0_1, and DCI format 0_2. The second DCI format may be determined by the following manners:
   i. specified by a protocol;
   ii. configured by a network side, and the configuration may be per-cell configuration, or per-cell + per TDRA table row configuration;
   iii. determined according to a certain rule, i.e. the first rule. For example, if only one DCI format is configured, the second DCI format is determined as the DCI format; if a plurality of DCI formats are configured, the second DCI format is determined according to one of at least one priority order, where the at least one priority order is any sorting combination of DCI format 0_0, DCI format 0_0, and DCI format 1_2.

In manner 2, the target time domain resource assignment table corresponding to each data transmission/cell is determined according to one of the time domain resource assignment tables corresponding to the data transmission/cell:
a) if the data transmission is PDSCH, the target TDRA table is at least one of the following: ①Default A, ②pdsch-TimeDomainAllocationList provided in pdsch-ConfigCommon, ③pdsch-TimeDomainAllocationList provided in PDSCH-Config, ④pdsch-TimeDomainAllocationListDCI-1-2 provided in PDSCH-Config. Further, the first time domain resource assignment table may be determined by the following manners:
   i. specified by a protocol;
   ii. configured by a network side, and the configuration may be per-cell configuration, or per-cell + per TDRA table row configuration;
   iii. determined according to a certain rule, i.e. a second rule. For example, if only one time domain resource assignment table is configured, the target time domain resource assignment table is determined as the time domain resource assignment table. If a plurality of time domain resource assignment tables are predefined or configured, the target time domain resource assignment table is determined according to one of at least one priority order, where the at least one priority order is any sorting combination of ①, ②, ③, and ④.
b) if the data transmission is PUSCH, the target TDRA table is at least one of the following: ① Default A, ② pusch-TimeDomainAllocationList provided in pusch-ConfigCommon, ③pusch-TimeDomainAllocationList provided in PUSCH-Config, ④ pusch-TimeDomainAllocationListDCI-0-1 provided in pusch-Config, ⑤ pusch-TimeDomainAllocationListDCI-0-2 provided in pusch-Config. Further, the first time domain resource assignment table may be determined by the following manners:
   i. specified by a protocol;
   ii. configured by a network side, and the configuration may be per-cell configuration, or per-cell + per TDRA table row configuration;
   iii. determined according to a certain rule, i.e. a second rule. For example, if only one time domain resource assignment table is configured, the target time domain resource assignment table is determined as the time domain resource assignment table. If a plurality of time domain resource assignment tables are predefined or configured, the target time domain resource assignment table is determined according to one of at least one priority order, where the at least one priority order is any sorting combination of ①, ②, ③, ④ and ⑤.

In manner 3, a specific per-cell/per-BWP TDRA table is configured or predefined for the first DCI (i.e., DCI format 0_X/1_X), for example, pdsch-TimeDomainAllocationListDCI-1-x provided in PDSCH-Config/ pdsch-TimeDomainAllocationListDCI-0-x provided in PUSCH-Config.

Further:
a) if the above first DCI specific TDRA table is configured, the first DCI specific TDRA table is used;
b) if the above first DCI specific TDRA table is not configured, the target TDRA table is determined according to the manner 2.

Since the first DCI may only appear in a USS, the above schemes are only applicable to the USS.

The technical problem solved by the method for indicating the time domain resource provided by the embodiments of the present disclosure is a problem that must be determined when the legacy TDRA table is used in the TDRA configuration and indication of multi-carrier scheduling.

Manner 1 is simple, with little modification to the protocol. When the legacy DCI format, i.e., the second DCI format, is determined, a corresponding TDRA table may be determined. However, the manner 1 is different from a determination manner of TDRA table in the existing protocol, and a concept of "second DCI" needs to be introduced in the manner 1.

Manner 2 is relatively aligned with the determination manner of TDRA table in the existing protocol, and does not need to introduce additional concepts, but it requires much modification to the protocol (reference to the main modification for the protocol may be made to the third and fourth embodiments, and tables in the third and fourth embodiments need to be written into the protocol).

In manner 3, it is required to configure or predefine DCI format 0_X/1_X specific TDRA table for the first DCI, which needs additional signaling, causes signaling overhead and has little significance. The advantage is that it is relatively aligned with the design of a currently defined DCI format 0_1/0_2 specific TDRA table.

The method for indicating the time domain resource provided by the embodiments of the present disclosure may be implemented as, but is not limited to, the following first to fourth embodiments.

### First embodiment

Time domain resource configuration and indication manner 1 (corresponding to the first indication manner):
The network side configures that a first set of cells includes cell 1 to cell 4, and defines a new joint TDRA table, i.e., a second TDRA table, as illustrated in Table 23.

**Table 23 Joint TDRA table**

| TDRA entry | Cell 1 | Cell 2 | Cell 3 | Cell 4 |
|---|---|---|---|---|
| 1 | 1 | 1 | 2 | 2 |
| 2 | 1 | 2 | 2 | 2 |
| 3 | 2 | 2 | 3 | 4 |
| 4 | 3 | 3 | 5 | 3 |
| ... | | | | |
| 16 | 15 | 13 | 14 | 7 |

In Table 23, the TDRA entry is a first row index, each TDRA entry in Table 23 includes TDRA information of cell 1 to cell 4, and TDRA information of each cell is indicated by an index (i.e., a second row index) that may be linked to a TDRA table (i.e., cell specific TDRA table) corresponding to the cell.

The first row indexes included in Table 23 include 1, 2 to 16, and a row corresponding to each first row index includes a second row index corresponding to each cell in cell 1 to cell 4. After a first target row index in the first row indexes is determined, a second row index of each cell indicated by the first target row index is a second target row index corresponding to each cell.

In some embodiments, the TDRA field in the first DCI includes 4 bits. When they indicate "0000" and cell 1+cell 3 are scheduled, it is first determined through "0000" that time domain resource information for cell 1+cell 3 is determined by TDRA entry 1 (i.e., the first target row index is 1) in the new TDRA table. Then, according to Table 23, time domain resource information corresponding to cell 1 is determined to be time domain resource information of TDRA entry 1 (i.e., the second target row index is 1) in a cell 1 specific TDRA table. Furthermore, according to Table 23, time domain resource information corresponding to cell 3 is determined to be time domain resource information of TDRA entry 2 (i.e., the second target row index is 2) in a cell 3 specific TDRA table.

Time domain resource configuration and indication manner 2 (corresponding to the second indication manner):
The network side configures that the first set of cells includes cell 1 to cell 4, and does not define a new TDRA table.

In some embodiments, the TDRA field in the first DCI includes 4 bits. When they indicate "0000" and cell 1+cell 3 are scheduled, it is determined that time domain resource information corresponding to cell 1 is time domain resource information TDRA entry 1 (i.e., the third target row index is 1) in a cell 1 specific TDRA table, and time domain resource information corresponding to cell 3 is time domain resource information of TDRA entry 1 (i.e., the third target row index is 1) in a cell 3 specific TDRA table.

### Second embodiment

In the second embodiment, the first information is a second DCI format.

The determination manner of the cell 1 specific TDRA table/the cell 3 specific TDRA table (i.e., a target TDRA table corresponding to cell 1/a target TDRA table corresponding to cell 3) in the first embodiment includes at least one of the following:
1. specified by a protocol, the cell 1 specific TDRA table/the cell 3 specific TDRA table is a TDRA table corresponding to cell 1/cell 3 DCI format x_1;
2. configured by a network side, the cell 1 specific TDRA table is a TDRA table for DCI format x_1, and the cell 3 specific TDRA table is a TDRA table for DCI format x_2;
3. configured by a network side, the cell 1 specific TDRA table/cell 3 specific TDRA table is per-cell+per TDRA entry configuration, as illustrated in Table 24:

**Table 24 Example of the per-cell+per TDRA entry configuration**

| TDRA entry | Cell 1 | Cell 2 | Cell 3 | Cell 4 |
|---|---|---|---|---|
| 1 | 1(DCI format x_1) | 1(DCI format x_2) | 2(DCI format x_2) | 2(DCI format x_2) |
| 2 | 1(DCI format x_1) | 2(DCI format x_1) | 2(DCI format x_1) | 2(DCI format x_2) |
| 3 | 2(DCI format x_1) | 2(DCI format x_1) | 3(DCI format x_2) | 4(DCI format x_1) |
| 4 | 3(DCI format x_2) | 3(DCI format x_1) | 5(DCI format x_2) | 3(DCI format x_1) |
| ... | | | | |
| 16 | 15(DCI format x_2) | 13(DCI format x_2) | 14(DCI format x_1) | 7(DCI format x_1) |

In Table 24, different TDRA entries are different first row indexes, and then different rows in Table 24 include second DCI formats corresponding to each of cells under different first row indexes, i.e., a second correspondence. For example, a row with first row index of 3 includes second DCI formats corresponding to each cell in cell1 to cell4: a second DCI format DCI format x_1 of cell1, a second DCI format x_1 of cell2, a second DCI format x_2 of cell3, and a second DCI format DCI format x_2 of cell4.
4. the cell 1 specific TDRA table is determined according to a priority order of DCI format x_1>x_0>x_2, that is, according to an order of the first rule illustrated in Table 25.

**Table 25 Example of the first rule**

| DCI format x_2 is configured? | | DCI format x_0 is configured? | | DCI format x_1 is configured? | | TDRA table used is the target TDRA table |
|---|---|---|---|---|---|---|
| | Yes | | No | | No | TDRA table for DCI format x_2 |
| | No/Yes | | Yes | | No | TDRA table for DCI format x_0 |
| | No/Yes | | No/Yes | | Yes | TDRA table for DCI format x_1 |

### Third embodiment

In third embodiment, the first information is a first TDRA table.

A determination manner of the cell 1 specific TDRA table/cell 3 specific TDRA table in first embodiment (assuming that data transmission is PDSCH) includes the following:
1. specified by a protocol, the cell 1 specific TDRA table/the cell 3 specific TDRA table is pdsch-TimeDomainAllocationList provided in PDSCH-Config configured by the cell 1/cell 3;
2. configured by a network side, the cell 1 specific TDRA table is a TDRA table provided in PDSCH-Config (i.e., pdsch-TimeDomainAllocationList provided in PDSCH-Config), and the cell 3 specific TDRA table is a TDRA table for DCI format 1_2 (i.e., pdsch-TimeDomainAllocationListDCI-1-2 provided in PDSCH-Config);
3. configured by a network side, the cell 1 specific TDRA table/ cell 3 specific TDRA table is per-cell + per TDRA entry configuration, as illustrated in Table 26.

**Table 26 Example of the per-cell + per TDRA entry configuration**

| TD RA entr y | Cell 1 | Cell 2 | Cell 3 | Cell 4 |
|---|---|---|---|---|
| 1 | 1 (pdsch-TimeDomainAllocat ionList provided in PDSCH-Config) | 1 (pdsch-TimeDomainAllocat ionList provided in PDSCH-Config) | 2 (pdsch-TimeDomainAllocat ionList provided in PDSCH-Config) | 2 (pdsch-TimeDomainAllocat ionListDCI-1-2 provided in PDSCH-Config) |
| 2 | 1 (pdsch- | 2 (pdsch- | 2 (pdsch- | 2 (pdsch- |
| | TimeDomainAllocat ionList provided in PDSCH-Config) | TimeDomainAllocat ionListDCI-1-2 provided in PDSCH-Config) | TimeDomainAllocat ionList provided in PDSCH-Config) | TimeDomainAllocat ionListDCI-1-2 provided in PDSCH-Config) |
| 3 | 2 (pdsch-TimeDomainAllocat ionListDCI-1-2 provided in PDSCH-Config) | 2 (pdsch-TimeDomainAllocat ionList provided in PDSCH-Config) | 3 (pdsch-TimeDomainAllocat ionList provided in PDSCH-Config) | 4 (pdsch-TimeDomainAllocat ionList provided in PDSCH-Config) |
| 4 | 3 (pdsch-TimeDomainAllocat ionListDCI-1-2 provided in PDSCH-Config) | 3 (pdsch-TimeDomainAllocat ionListDCI-1-2 provided in PDSCH-Config) | 5 (pdsch-TimeDomainAllocat ionListDCI-1-2 provided in PDSCH-Config) | 3 (pdsch-TimeDomainAllocat ionList provided in PDSCH-Config) |
| ... | | | | |
| 6 | 15 (pdsch-TimeDomainAllocat ionListDCI-1-2 provided in PDSCH-Config) | 13 (pdsch-TimeDomainAllocat ionListDCI-1-2 provided in PDSCH-Config) | 14 (pdsch-TimeDomainAllocat ionListDCI-1-2 provided in PDSCH-Config) | 7 (pdsch-TimeDomainAllocat ionList provided in PDSCH-Config) |

In Table 26, a first TDRA table is added on the basis of the joint TDRA table, the TDRA entry is the first row index, and each row is configured with first TDRA tables corresponding to different cells. For example, first TDRA tables corresponding to each cell among cell1 to cell4 included under the first row index of 4 include the following: a first TDRA table corresponding to cell1, which is pdsch-TimeDomainAllocationListDCI-1-2 provided in PDSCH-Config, a first TDRA table corresponding to cell2, which is pdsch-TimeDomainAllocationListDCI-1-2 provided in PDSCH-Config, a first TDRA table corresponding to cell3, which is pdsch-TimeDomainAllocationListDCI-1-2 provided in PDSCH-Config, and a first TDRA table corresponding to cell4, which is pdsch-TimeDomainAllocationList provided in PDSCH-Config.
4, the cell 1 specific TDRA table is determined according to a priority order of pdsch-TimeDomainAllocationList provided in PDSCH-Config > pdsch-TimeDomainAllocationListDCI-1-2 provided in PDSCH-Config > pdsch-TimeDomainAllocationList provided in pdsch-ConfigCommon > Default A, that is, determined according to a priority order illustrated in Table 27.

**Table 27 Example of the second rule**

| pdsch-ConfigCommon includes pdsch-TimeDomainAllocat ionList | | PDSCH-Config includes pdsch-TimeDomainAllocation ListDCI-1-2 | | PDSCH-Config includes pdsch-TimeDomainAllocat ionList | | TDRA table to apply |
|---|---|---|---|---|---|---|
| | No | | No | | No | Default A |
| | Yes | | No | | No | pdsch-TimeDomainAllocation List provided in pdsch-ConfigCommon |
| | No/Yes | | Yes | | No | pdsch-TimeDomainAllocation ListDCI-1-2 provided in PDSCH-Config |
| | No/Yes | | No/Yes | | Yes | pdsch-TimeDomainAllocation List provided in PDSCH-Config |

Optionally, the cell 1 specific TDRA table is determined according to a priority order of pdsch-TimeDomainAllocationList provided in PDSCH-Config > pdsch-TimeDomainAllocationList provided in pdsch-ConfigCommon > pdsch-TimeDomainAllocationListDCI-1-2 provided in PDSCH-Config >Default A, that is, determined according to a priority order illustrated in Table 28.

**Table 28 Example of the second rule**

| | | | |
|---|---|---|---|
| PDSCH-Config includes pdsch-TimeDomainAllocation ListDCI-1-2 | pdsch-ConfigCommon includes pdsch-TimeDomainAllocat ionList | PDSCH-Config includes pdsch-TimeDomainAllocat ionList | TDRA table to apply |
| | | | |
| No | No | No | Default A |
| Yes | No | No | pdsch-TimeDomainAllocation ListDCI-1-2 provided in PDSCH-Config |
| No/Yes | Yes | No | pdsch-TimeDomainAllocation List provided in pdsch-ConfigCommon |
| No/Yes | No/Yes | Yes | pdsch-TimeDomainAllocation List provided in PDSCH-Config |

The above determination manner 4 in the third embodiment includes the following technical benefits:
pdsch-TimeDomainAllocationList provided in PDSCH-Config is a TDRA table with the highest priority among the plurality of TDRA tables, time domain resource information is determined based on pdsch-TimeDomainAllocationList provided in PDSCH-Config, which can improve resource utilization. This is because SLIVs configured in the pdsch-TimeDomainAllocationList provided in PDSCH-Config contain a larger number of symbols compared to the pdsch-TimeDomainAllocationListDCI-1-2 provided in PDSCH-Config, which avoids fragmentation of resources across an entire slot and facilitates the transmission of larger data packets, and this aligns with the design objective of prioritizing the efficiency of multi-carrier scheduling. However, the SLIVs configured in the pdsch-TimeDomainAllocationListDCI-1-2 provided in PDSCH-Config contain a smaller number of symbols, which can accommodate designs for low-latency services, but the low-latency services are not the goal pursued in multi-carrier scheduling.

Priorities of pdsch-TimeDomainAllocationListDCI-1-2 provided in PDSCH-Config and pdsch-TimeDomainAllocationList provided in pdsch-ConfigCommon may be set according to requirements. If a priority of pdsch-TimeDomainAllocationListDCI-1-2 provided in PDSCH-Config is high, pdsch-TimeDomainAllocationListDCI-1-2 provided in PDSCH-Config is BWP-specific configuration and may be applied to available resources of different BWPs, but it is only suitable for low-latency services. However, the pdsch-TimeDomainAllocationList provided in pdsch-ConfigCommon is cell-specific configuration and may be applied to services (such as eMBB) other than low-latency services.

### Fourth embodiment

In the fourth embodiment, the first information is a first TDRA table.

A determination manner of the cell 1 specific TDRA table/cell 3 specific TDRA table mentioned in first embodiment (assuming that data transmission is PUSCH) includes the following:
Determination manners 1, 2, 3 in the data transmission of PUSCH are the same as those described in the above data transmission of PDSCH, which will not be repeated herein.

4, the cell 1 specific TDRA table is determined according to a priority order of pusch-TimeDomainAllocationListDCI-0-1 provided in pusch-Config >pusch-TimeDomainAllocationList provided in PUSCH-Config > pusch-TimeDomain AllocationListDCI-0-2 provided in pusch-Config > pusch-TimeDomainAllocationList provided in pusch-ConfigCommon>Default A, that is, determined according to a priority order illustrated in Table 29.

**Table 29 Example of the second rule**

| pusch-ConfigCommo n includes pusch-TimeDomainAl locationList | pusch-Config includes includes pusch-TimeDomainAlloc ationListDCI-0-2 | pusch-Config includes pusch-TimeDomainAl locationList | pusch-Config includes pusch-TimeDomainAlloc ationListDCI-0-1 | PUSCH time domain resource allocation to apply |
|---|---|---|---|---|
| No | No | No | No | Default A |
| Yes | No | No | No | pusch-TimeDomainAlloc ationList provided in pusch-ConfigCommon |
| No/Yes | Yes | No | No | pusch-TimeDomainAlloc ationListDCI-0-2 provided in pusch-Config |
| No/Yes | No/Yes | Yes | No | pusch-TimeDomainAlloc ationList provided in pusch-Config |
| No/Yes | No/Yes | No/Yes | Yes | pusch-TimeDomainAlloc ationListDCI-0-1 provided in pusch-Config |

The above is just an example of priorities of different TDRA tables in a PUSCH scenario. The technical advantages of different priority orders are similar to those in the PDSCH scenario. Overall, a priority of a table configured for DCI-0-1 is higher than that of a table configured for DCI-0-2, and the difference is that pusch-TimeDomainAllocationList provided in pusch-Config and pusch-TimeDomainAllocationListDCI-0-1 provided in pusch-Config will not appear at the same time, so priorities of the two may be ignored.

Therefore, Table 29 may be simplified to Table 30 and Table 31.

**Table 30 Example of the second rule**

| pusch-ConfigCommon includes pusch-TimeDomainAlloca tionList | pusch-Config includes includes pusch-TimeDomainAllocatio nListDCI-0-2 | pusch-Config includes pusch-TimeDomainAllocatio nListDCI-0-1 | PUSCH time domain resource allocation to apply |
|---|---|---|---|
| No | No | No | Default A |
| Yes | No | No | pusch-TimeDomainAllocatio nList provided in pusch-ConfigCommon |
| No/Yes | Yes | No | pusch-TimeDomainAllocatio nListDCI-0-2 provided in pusch-Config |
| No/Yes | No/Yes | Yes | pusch-TimeDomainAllocatio nListDCI-0-1 provided in pusch-Config |

**Table 31 Example of the second rule**

| pusch-ConfigCommon includes pusch-TimeDomainAllocationList | pusch-Config includes pusch-TimeDomainAllocationList | PUSCH time domain resource allocation to apply |
|---|---|---|
| No | No | Default A |
| Yes | No | pusch-TimeDomainAllocationList provided in pusch-ConfigCommon |
| No/Yes | Yes | pusch-TimeDomainAllocationList provided in pusch-Config |

In the method for indicating the time domain resource provided by the embodiments of the present disclosure, the N data transmissions scheduled by the first DCI do not support repetition, that is, the following parameters are not applicable to the PDSCH/PUSCH scheduled by the first DCI: pusch-AggregationFactor, pdsch-AggregationFactor, and numberOfRepetitions. The N data transmissions scheduled by the first DCI not supporting repetition may be described as follows.
- Description perspective 1: the number of repetitions of N data transmissions scheduled by the first DCI is 1;
- Description perspective 2: the terminal does not expect multi-carrier scheduling and repetition related parameters (e.g. pusch-AggregationFactor, pdsch-AggregationFactor, numberOfRepetitions) to be configured/enabled at the same time.

Preferred embodiments of the present disclosure have been described in detail with reference to the accompanying drawings, but the present disclosure is not limited to the specific details of the above embodiments. Within the scope of the technical concept of the present disclosure, various simple modifications may be made to the technical solution of the present disclosure, and these simple modifications all belong to the scope of protection of the present disclosure. For example, each of the specific technical features described in the above specific embodiments may be combined in any suitable manner without contradiction, and various possible combinations are not further described in the present disclosure in order to avoid unnecessary repetition. For another example, various embodiments of the present disclosure may be combined with each other arbitrarily so long as they do violate the idea of the present disclosure, and they should likewise be regarded as the disclosed content of the present disclosure. For another example, on the premise of no conflict, various embodiments described in the present disclosure and/or the technical features in each embodiment may be arbitrarily combined with the related art, and the technical solution obtained after combination should also fall within the scope of protection of the present disclosure.

It is to be understood that in various method embodiments of the present disclosure, the size of the sequence numbers of the above-mentioned processes does not mean the order of execution, and the execution order of each process should be determined by its function and inherent logic, and should not be limited in any way to the implementation process of the embodiments of the present disclosure. Further, in embodiments of the present disclosure, the terms "downlink", "uplink" and "sidelink" are used to denote the transmission direction of the signal or data, where "downlink" is used to denote the transmission direction of the signal or data as a first direction transmitted from the site to the user equipment of the cell, and "uplink" is used to denote the transmission direction of the signal or data as a second direction transmitted from the user equipment of the cell to the site, "sidelink" is used to denote the transmission direction of the signal or data as a first direction transmitted from a user equipment 1 to a user equipment 2. For example, "downlink signal" denotes that the transmission direction of the signal is the first direction. In the present disclosure, the term "and/or" is used to describe an association relationship of associated objects, and represents that there may be three relationships. Specifically, A and/or B may represent the following three situations: i.e., independent existence of A, existence of both A and B and independent existence of B. In addition, the character "/" in the present disclosure generally represents that an "or" relationship is formed between the previous and next associated objects.

FIG. 5 is a first schematic diagram of a structural composition of a terminal device provided by an embodiment of the present disclosure. As illustrated in FIG. 5, the terminal device 500 includes a first communication unit 501.

The first communication unit 501 is configured to receive first downlink control information (DCI) from a network device, the first DCI being used for scheduling at least one data transmission.

Time domain resource information corresponding to a first data transmission in the at least one data transmission is determined based on the first DCI and a target time domain resource assignment (TDRA) table corresponding to the first data transmission, and a first field in the first DCI is used for indicating time domain resource information corresponding to each of the at least one data transmission.

It can be understood that the terminal device 500 may further include a determining unit. The determining unit is configured to determine the time domain resource information corresponding to each of the at least one data transmission according to the first field of the first DCI.

In some embodiments, if the first data transmission is an uplink data transmission, the target TDRA table is one of the following:
a first uplink TDRA table configured by the network device for DCI format 0_1; a second uplink TDRA table configured by the network device through first configuration information, the first configuration information being terminal specific configuration information corresponding to the first data transmission; a third uplink TDRA table configured by the network device for DCI format 0_2; a fourth uplink TDRA table configured by the network device through second configuration information, the second configuration information being cell specific configuration information corresponding to the first data transmission; a fifth uplink TDRA table that is default and specified by a protocol; or a sixth uplink TDRA table for a first DCI format, the first DCI format being a DCI format adopted by the first DCI, and the first DCI format being different from the DCI format 0_1 and the DCI format 0_2.

In some embodiments, if the first data transmission is a downlink data transmission, the target TDRA table is one of the following: a first downlink TDRA table configured by the network device through third configuration information, the third configuration information being terminal specific configuration information corresponding to the first data transmission; a second downlink TDRA table configured by the network device for DCI format 1_2; a third downlink TDRA table configured by the network device through fourth configuration information, the fourth configuration information being cell specific configuration information corresponding to the first data transmission; a fourth downlink TDRA table that is default and specified by a protocol; or a fifth downlink TDRA table for a first DCI format, the first DCI format being a DCI format adopted by the first DCI, and the first DCI format being different from the DCI format 1_2.

In some embodiments, the target TDRA table is determined according to at least one of the following: a first DCI format, the first DCI format being a DCI format adopted by the first DCI; a second DCI format, the second DCI format being a DCI format used for scheduling one data transmission; or a first TDRA table.

In some embodiments, if there is a TDRA table corresponding to the first DCI format, the target TDRA table is determined based on the first DCI format, and the target TDRA table is the TDRA table corresponding to the first DCI format.

In some embodiments, if there is no TDRA table corresponding to the first DCI format, the target TDRA table is determined according to the second DCI format or the first TDRA table.

In some embodiments, the TDRA table corresponding to the first DCI format is configured by the network device or predefined by a protocol.

In some embodiments, if the target TDRA table is determined according to the second DCI format, the target TDRA table is a TDRA table corresponding to the second DCI format.

In some embodiments, if the first data transmission is an uplink data transmission, the second DCI format is one of the following: DCI format 0_0, DCI format 0_1, and DCI format 0_2.

In some embodiments, if the first data transmission is a downlink data transmission, the second DCI format is one of the following: DCI format 1_0, DCI format 1_1, and DCI format 1_2.

In some embodiments, the second DCI format is determined based on fifth configuration information configured by the network device, the fifth configuration information being used for configuring at least one first correspondence or at least one second correspondence.

The first correspondence is a correspondence between a cell or a bandwidth part (BWP) and a second DCI format, and the second correspondence is a correspondence among a cell or a BWP, a first row index, and a second DCI format, the first row index being used for determining the time domain resource information corresponding to each of the at least one data transmission.

In some embodiments, the target TDRA table is determined according to a first rule, the first rule including at least one of the following: if the terminal device is not configured with DCI format x_1 and DCI format x_0, and the terminal device is configured with DCI format x_2, then the target TDRA table is a TDRA table corresponding to the DCI format x_2; if the terminal device is not configured with the DCI format x_1, and the terminal device is configured with the DCI format x_0, then the target TDRA table is a TDRA table corresponding to the DCI format x_0; or if the terminal device is configured with the DCI format x_1, the target TDRA table is a TDRA table corresponding to the DCI format x_1; where x takes a value of 0 or 1.

In some embodiments, if the target TDRA table is determined according to the first TDRA table, the target TDRA table is the first TDRA table.

In some embodiments, the first TDRA table is determined based on sixth configuration information configured by the network device, the sixth configuration information being used for configuring at least one third correspondence or at least one fourth correspondence.

The third correspondence is a correspondence between a cell or a BWP and the first TDRA table, and the fourth correspondence is a correspondence among a cell or a BWP, a first row index, and the first TDRA table, the first row index being used for determining the time domain resource information corresponding to each of the at least one data transmission.

In some embodiments, the target TDRA table is determined according to a second rule, and if the first data transmission is an uplink data transmission, the second rule includes at least one of the following: if the terminal device is not configured with a first uplink TDRA table, a second uplink TDRA table, a third uplink TDRA table and a fourth uplink TDRA table, the target TDRA table is a fifth uplink TDRA table; if the terminal device is not configured with the first uplink TDRA table, the second uplink TDRA table and the third uplink TDRA table, and the terminal device is configured with the fourth uplink TDRA table, then the target TDRA table is the fourth uplink TDRA table; if the terminal device is not configured with the first uplink TDRA table and the second uplink TDRA table, and the terminal device is configured with the third uplink TDRA table, then the target TDRA table is the third uplink TDRA table; if the terminal device is not configured with the first uplink TDRA table, and the terminal device is configured with the second uplink TDRA table, then the target TDRA table is the second uplink TDRA table; or if the terminal device is configured with the first uplink TDRA table, the target TDRA table is the first uplink TDRA table.

In some embodiments, the target TDRA table is determined according to a second rule, and if the first data transmission is an uplink data transmission, the second rule includes at least one of the following: if the terminal device is not configured with a second uplink TDRA table, a first uplink TDRA table, a third uplink TDRA table and a fourth uplink TDRA table, then the target TDRA table is a fifth uplink TDRA table; if the terminal device is not configured with the second uplink TDRA table, the first uplink TDRA table, and the third uplink TDRA table, and the terminal device is configured with the fourth uplink TDRA table, then the target TDRA table is the fourth uplink TDRA table; if the terminal device is not configured with the second uplink TDRA table and the first uplink TDRA table, and the terminal device is configured with the third uplink TDRA table, then the target TDRA table is the third uplink TDRA table; if the terminal device is not configured with the second uplink TDRA table, and the terminal device is configured with the first uplink TDRA table, then the target TDRA table is the first uplink TDRA table; or if the terminal device is configured with the second uplink TDRA table, the target TDRA table is the second uplink TDRA table.

In some embodiments, the target TDRA table is determined according to a second rule, and if the first data transmission is an uplink data transmission, the second rule includes at least one of the following: if the terminal device is not configured with a first uplink TDRA table, a second uplink TDRA table, a fourth uplink TDRA table and a third uplink TDRA table, the target TDRA table is a fifth uplink TDRA table; if the terminal device is not configured with the first uplink TDRA table, the second uplink TDRA table and the fourth uplink TDRA table, and the terminal device is configured with the third uplink TDRA table, then the target TDRA table is the third uplink TDRA table; if the terminal device is not configured with the first uplink TDRA table and the second uplink TDRA table, and the terminal device is configured with the fourth uplink TDRA table, then the target TDRA table is the fourth uplink TDRA table; if the terminal device is not configured with the first uplink TDRA table, and the terminal device is configured with the second uplink TDRA table, then the target TDRA table is the second uplink TDRA table; or if the terminal device is not configured with the first uplink TDRA table, the target TDRA table is the first uplink TDRA table.

In some embodiments, the target TDRA table is determined according to a second rule, and if the first data transmission is an uplink data transmission, the second rule includes at least one of the following: if the terminal device is not configured with a first uplink TDRA table, a third uplink TDRA table, a second uplink TDRA table and a fourth uplink TDRA table, the target TDRA table is a fifth uplink TDRA table; if the terminal device is not configured with the first uplink TDRA table, the third uplink TDRA table, and the second uplink TDRA table and the terminal device is configured with the fourth uplink TDRA table, then the target TDRA table is the fourth uplink TDRA table; if the terminal device is not configured with the first uplink TDRA table and the third uplink TDRA table, and the terminal device is configured with the second uplink TDRA table, then the target TDRA table is the second uplink TDRA table; if the terminal device is not configured with the first uplink TDRA table, and the terminal device is configured with the third uplink TDRA table, then the target TDRA table is the third uplink TDRA table; or if the terminal device is configured with the first uplink TDRA table, the target TDRA table is the first uplink TDRA table.

In some embodiments, the target TDRA table is determined according to a second rule, and if the first data transmission is a downlink data transmission, the second rule includes at least one of the following: if the terminal device is not configured with a first downlink TDRA table, a second downlink TDRA table and a third downlink TDRA table, the target TDRA table is a fourth downlink TDRA table; if the terminal device is not configured with the first downlink TDRA table and the second downlink TDRA table, and the terminal device is configured with the third downlink TDRA table, then the target TDRA table is the third downlink TDRA table; if the terminal device is not configured with the first downlink TDRA table, and the terminal device is configured with the second downlink TDRA table, then the target TDRA table is the second downlink TDRA table; or if the terminal device is configured with the first downlink TDRA table, the target TDRA table is the first downlink TDRA table.

In some embodiments, the target TDRA table is determined according to a second rule, and if the first data transmission is a downlink data transmission, the second rule includes at least one of the following: if the terminal device is not configured with a first downlink TDRA table, a second downlink TDRA table and a third downlink TDRA table, the target TDRA table is the fourth downlink TDRA table; if the terminal device is not configured with the first downlink TDRA table and the third downlink TDRA table, and the terminal device is configured with the second downlink TDRA table, then the target TDRA table is the second downlink TDRA table; if the terminal device is not configured with the first downlink TDRA table, and the terminal device is configured with the third downlink TDRA table, then the target TDRA table is the third downlink TDRA table; or if the terminal device is configured with the first downlink TDRA table, the target TDRA table is the first downlink TDRA table.

In some embodiments, the at least one data transmission corresponds to at least one cell.

In some embodiments, a value of the first field is used for determining a first target row index, and the time domain resource information corresponding to the first data transmission is determined according to a TDRA row corresponding to a second target row index in the target TDRA table. The second target row index is determined according to the first target row index and a second TDRA table, each row in the second TDRA table indicates at least time domain resource information corresponding to each of the at least one data transmission.

In some embodiments, a value of the first field is used for determining a third target row index, and the time domain resource information corresponding to each of the at least one data transmission is determined according to a TDRA row corresponding to the third target row index in the target TDRA table.

In some embodiments, each of the at least one data transmission does not support repetition.

It will be understood by those skilled in the art that the above description of the device of the embodiments of the present disclosure may be understood with reference to the description of the method for indicating the time domain resource of the embodiments of the present disclosure.

FIG. 6 is a schematic diagram of a structural composition of a network device provided by an embodiment of the present disclosure. As illustrated in FIG. 6, the network device 600 includes a second communication unit 601.

The second communication unit 601 is configured to send first downlink control information (DCI) to a terminal device, the first DCI being used for scheduling at least one data transmission.

Time domain resource information corresponding to a first data transmission in the at least one data transmission is determined based on the first DCI and a target time domain resource assignment (TDRA) table corresponding to the first data transmission, and a first field in the first DCI is used for indicating time domain resource information corresponding to each of the at least one data transmission.

It can be understood that the network device 600 may further include a determining unit. The determining unit is configured to determine the first DCI.

In some embodiments, if the first data transmission is an uplink data transmission, the target TDRA table is one of the following: a first uplink TDRA table configured by the network device for DCI format 0_1; a second uplink TDRA table configured by the network device through first configuration information, the first configuration information being terminal specific configuration information corresponding to the first data transmission; a third uplink TDRA table configured by the network device for DCI format 0_2; a fourth uplink TDRA table configured by the network device through second configuration information, the second configuration information being cell specific configuration information corresponding to the first data transmission; a fifth uplink TDRA table that is default and specified by a protocol; or a sixth uplink TDRA table for a first DCI format, the first DCI format being a DCI format adopted by the first DCI, and the first DCI format being different from the DCI format 0_1 and the DCI format 0_2.

In some embodiments, if the first data transmission is a downlink data transmission, the target TDRA table is one of the following: a first downlink TDRA table configured by the network device through third configuration information, the third configuration information being terminal specific configuration information corresponding to the first data transmission; a second downlink TDRA table configured by the network device for DCI format 1_2; a third downlink TDRA table configured by the network device through fourth configuration information, the fourth configuration information being cell specific configuration information corresponding to the first data transmission; a fourth downlink TDRA table that is default and specified by a protocol; or a fifth downlink TDRA table for a first DCI format, the first DCI format being a DCI format adopted by the first DCI, and the first DCI format being different from the DCI format 1_2.

In some embodiments, the target TDRA table is determined according to at least one of the following: a first DCI format, the first DCI format being a DCI format adopted by the first DCI; a second DCI format, the second DCI format being a DCI format used for scheduling one data transmission; or a first TDRA table.

In some embodiments, if there is a TDRA table corresponding to the first DCI format, the target TDRA table is determined based on the first DCI format, and the target TDRA table is the TDRA table corresponding to the first DCI format.

In some embodiments, if there is no TDRA table corresponding to the first DCI format, the target TDRA table is determined according to the second DCI format or the first TDRA table.

In some embodiments, the TDRA table corresponding to the first DCI format is configured by the network device or predefined by a protocol.

In some embodiments, if the target TDRA table is determined according to the second DCI format, the target TDRA table is a TDRA table corresponding to the second DCI format.

In some embodiments, if the first data transmission is an uplink data transmission, the second DCI format is one of the following: DCI format 0_0, DCI format 0_1, and DCI format 0_2.

In some embodiments, if the first data transmission is a downlink data transmission, the second DCI format is one of the following: DCI format 1_0, DCI format 1_1, and DCI format 1_2.

In some embodiments, the second DCI format is determined based on fifth configuration information configured by the network device, the fifth configuration information being used for configuring at least one first correspondence or at least one second correspondence.

The first correspondence is a correspondence between a cell or a bandwidth part (BWP) and a second DCI format, and the second correspondence is a correspondence among a cell or a BWP, a first row index, and a second DCI format, the first row index being used for determining the time domain resource information corresponding to each of the at least one data transmission.

In some embodiments, the target TDRA table is determined according to a first rule, the first rule including at least one of the following: if the terminal device is not configured with DCI format x_1 and DCI format x_0, and the terminal device is configured with DCI format x_2, then the target TDRA table is a TDRA table corresponding to the DCI format x_2; if the terminal device is not configured with the DCI format x_1, and the terminal device is configured with the DCI format x_0, then the target TDRA table is a TDRA table corresponding to the DCI format x_0; or if the terminal device is configured with the DCI format x_1, the target TDRA table is a TDRA table corresponding to the DCI format x_1; where x takes a value of 0 or 1.

In some embodiments, if the target TDRA table is determined according to the first TDRA table, the target TDRA table is the first TDRA table.

In some embodiments, the first TDRA table is determined based on sixth configuration information configured by the network device, the sixth configuration information being used for configuring at least one third correspondence or at least one fourth correspondence.

The third correspondence is a correspondence between a cell or a BWP and the first TDRA table, and the fourth correspondence is a correspondence among a cell or a BWP, a first row index, and the first TDRA table, the first row index being used for determining the time domain resource information corresponding to each of the at least one data transmission.

In some embodiments, the target TDRA table is determined according to a second rule, and if the first data transmission is an uplink data transmission, the second rule includes at least one of the following: if the terminal device is not configured with a first uplink TDRA table, a second uplink TDRA table, a third uplink TDRA table and a fourth uplink TDRA table, then the target TDRA table is a fifth uplink TDRA table; if the terminal device is not configured with the first uplink TDRA table, the second uplink TDRA table and the third uplink TDRA table, and the terminal device is configured with the fourth uplink TDRA table, then the target TDRA table is the fourth uplink TDRA table; if the terminal device is not configured with the first uplink TDRA table and the second uplink TDRA table, and the terminal device is configured with the third uplink TDRA table, then the target TDRA table is the third uplink TDRA table; if the terminal device is not configured with the first uplink TDRA table, and the terminal device is configured with the second uplink TDRA table, then the target TDRA table is the second uplink TDRA table; or if the terminal device is configured with the first uplink TDRA table, the target TDRA table is the first uplink TDRA table.

In some embodiments, the target TDRA table is determined according to a second rule, and if the first data transmission is an uplink data transmission, the second rule includes at least one of the following: if the terminal device is not configured with a second uplink TDRA table, a first uplink TDRA table, a third uplink TDRA table and a fourth uplink TDRA table, the target TDRA table is a fifth uplink TDRA table; if the terminal device is not configured with the second uplink TDRA table, the first uplink TDRA table, and the third uplink TDRA table, and the terminal device is configured with the fourth uplink TDRA table, then the target TDRA table is the fourth uplink TDRA table; if the terminal device is not configured with the second uplink TDRA table and the first uplink TDRA table, and the terminal device is configured with the third uplink TDRA table, then the target TDRA table is the third uplink TDRA table; if the terminal device is not configured with the second uplink TDRA table, and the terminal device is configured with the first uplink TDRA table, then the target TDRA table is the first uplink TDRA table; or if the terminal device is configured with the second uplink TDRA table, the target TDRA table is the second uplink TDRA table.

In some embodiments, the target TDRA table is determined according to a second rule, and if the first data transmission is an uplink data transmission, the second rule includes at least one of the following: if the terminal device is not configured with a first uplink TDRA table, a second uplink TDRA table, a fourth uplink TDRA table and a third uplink TDRA table, the target TDRA table is a fifth uplink TDRA table; if the terminal device is not configured with the first uplink TDRA table, the second uplink TDRA table and the fourth uplink TDRA table, and the terminal device is configured with the third uplink TDRA table, then the target TDRA table is the third uplink TDRA table; if the terminal device is not configured with the first uplink TDRA table and the second uplink TDRA table, and the terminal device is configured with the fourth uplink TDRA table, then the target TDRA table is the fourth uplink TDRA table; if the terminal device is not configured with the first uplink TDRA table, and the terminal device is configured with the second uplink TDRA table, then the target TDRA table is the second uplink TDRA table; or if the terminal device is not configured with the first uplink TDRA table, the target TDRA table is the first uplink TDRA table.

In some embodiments, the target TDRA table is determined according to a second rule, and if the first data transmission is an uplink data transmission, the second rule includes at least one of the following: if the terminal device is not configured with a first uplink TDRA table, a third uplink TDRA table, a second uplink TDRA table and a fourth uplink TDRA table, the target TDRA table is a fifth uplink TDRA table; if the terminal device is not configured with the first uplink TDRA table, the third uplink TDRA table, and the second uplink TDRA table and the terminal device is configured with the fourth uplink TDRA table, then the target TDRA table is the fourth uplink TDRA table; if the terminal device is not configured with the first uplink TDRA table and the third uplink TDRA table, and the terminal device is configured with the second uplink TDRA table, then the target TDRA table is the second uplink TDRA table; if the terminal device is not configured with the first uplink TDRA table, and the terminal device is configured with the third uplink TDRA table, then the target TDRA table is the third uplink TDRA table; or if the terminal device is configured with the first uplink TDRA table, the target TDRA table is the first uplink TDRA table.

In some embodiments, the target TDRA table is determined according to a second rule, and if the first data transmission is a downlink data transmission, the second rule includes at least one of the following: if the terminal device is not configured with a first downlink TDRA table, a second downlink TDRA table and a third downlink TDRA table, the target TDRA table is a fourth downlink TDRA table; if the terminal device is not configured with the first downlink TDRA table and the second downlink TDRA table, and the terminal device is configured with the third downlink TDRA table, then the target TDRA table is the third downlink TDRA table; if the terminal device is not configured with the first downlink TDRA table, and the terminal device is configured with the second downlink TDRA table, then the target TDRA table is the second downlink TDRA table; or if the terminal device is configured with the first downlink TDRA table, the target TDRA table is the first downlink TDRA table.

In some embodiments, the target TDRA table is determined according to a second rule, and if the first data transmission is a downlink data transmission, the second rule includes at least one of the following: if the terminal device is not configured with a first downlink TDRA table, a second downlink TDRA table and a third downlink TDRA table, the target TDRA table is the fourth downlink TDRA table; if the terminal device is not configured with the first downlink TDRA table and the third downlink TDRA table, and the terminal device is configured with the second downlink TDRA table, then the target TDRA table is the second downlink TDRA table; if the terminal device is not configured with the first downlink TDRA table, and the terminal device is configured with the third downlink TDRA table, then the target TDRA table is the third downlink TDRA table; or if the terminal device is configured with the first downlink TDRA table, the target TDRA table is the first downlink TDRA table.

In some embodiments, the at least one data transmission corresponds to at least one cell.

In some embodiments, a value of the first field is used for determining a first target row index, and the time domain resource information corresponding to the first data transmission is determined according to a TDRA row corresponding to a second target row index in the target TDRA table. The second target row index is determined according to the first target row index and a second TDRA table, and each row in the second TDRA table indicates at least time domain resource information corresponding to each of the at least one data transmission.

In some embodiments, a value of the first field is used for determining a third target row index, and the time domain resource information corresponding to each of the at least one data transmission is determined according to a TDRA row corresponding to the third target row index in the target TDRA table.

In some embodiments, each of the at least one data transmission does not support repetition.

It will be understood by those skilled in the art that the above description of the network device of the embodiments of the present disclosure may be understood with reference to the description of the method for indicating the time domain resource of the embodiments of the present disclosure.

FIG. 7 is a schematic structural diagram of a communication device 700 provided by an embodiment of the present disclosure. The communication device may be a terminal device or a network device. The communication device 700 illustrated in FIG. 7 includes a processor 710 that may call and execute a computer program from a memory to implement the method in the embodiments of the present disclosure.

Optionally, as illustrated in FIG. 7, the communication device 700 may also include a memory 720. The processor 710 may call and execute a computer program from the memory 720 to implement the method in the embodiments of the present disclosure.

The memory 720 may be a separate device independent of the processor 710 or may be integrated in the processor 710.

As illustrated in FIG. 7, the communication device 700 may also include a transceiver 730. The processor 710 may control the transceiver 730 to communicate with other devices, and in particular send information or data to other devices, or receive information or data sent by other devices.

The transceiver 730 may include a transmitter and a receiver. The transceiver 730 may further include antennas. The number of antennas may be one or more.

Optionally, the communication device 700 may be specifically the network device of the embodiments of the present disclosure, and the communication device 700 may implement corresponding processes implemented by the network device in various methods of the embodiments of the present disclosure, which will not be repeated here for the sake of brevity.

When the communication device 700 is implemented as the network device of the embodiments of the present disclosure, the second communication unit 601 in the network device may be implemented by the transceiver 730 in the communication device 700, and the determining unit may be implemented by the processor 710 in the communication device 700.

Optionally, the communication device 700 may be specifically a mobile terminal/terminal device of the embodiments of the present disclosure, and the communication device 700 may implement corresponding processes implemented by the mobile terminal/the terminal device in various methods of the embodiments of the present disclosure, which will not be repeated here for the sake of brevity.

When the communication device 700 is implemented as the terminal device of the embodiments of the present disclosure, the first communication unit 501 in the terminal device may be implemented by the transceiver 730 in the communication device 700, and the determining unit may be implemented by the processor 710 in the communication device 700.

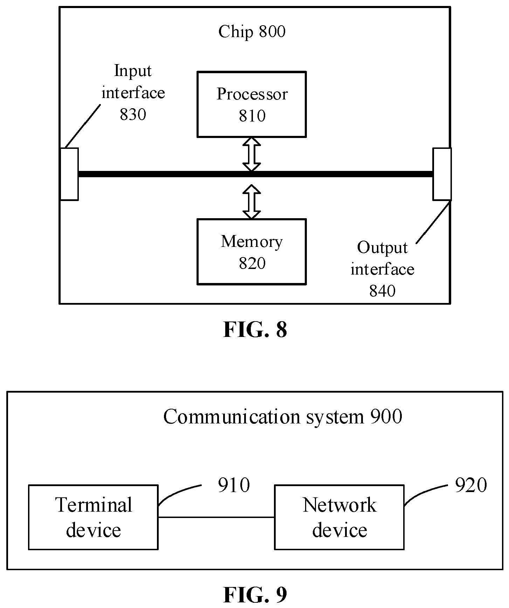

FIG. 8 is a schematic structural diagram of a chip according to an embodiment of the present disclosure. A chip 800 illustrated in FIG. 8 includes a processor 810 that may call and execute a computer program from memory to implement the methods in the embodiments of the present disclosure.

Optionally, as illustrated in FIG. 8, the chip 800 may also include a memory 820. The processor 810 may call and execute a computer program from the memory 820 to implement the methods in the embodiments of the present disclosure.

The memory 820 may be a separate device independent of the processor 810 or may be integrated in the processor 810.

Optionally, the chip 800 may also include an input interface 830. The processor 810 may control the input interface 830 to communicate with other devices or chips, and in particular to obtain information or data sent by other devices or chips.

Optionally, the chip 800 may also include an output interface 840. The processor 810 may control the output interface 840 to communicate with other devices or chips, and in particular to output information or data to other devices or chips.

Optionally, the chip may be applied to the network device of the embodiments of the present disclosure, and the chip may implement corresponding processes implemented by the network device in various methods of the embodiments of the present disclosure, which will not be repeated here for the sake of brevity.

When the chip is implemented as the network device of the embodiments of the present disclosure, the second communication unit 601 in the network device may be implemented by the output interface 840 in the chip 800, and the determining unit may be implemented by the processor 810 in the chip 800.

Optionally, the chip may be applied to be a mobile terminal/terminal device of the embodiments of the present disclosure, and the chip may implement corresponding processes implemented by the mobile terminal/the terminal device in the respective methods of the embodiments of the present disclosure, which will not be repeated here for the sake of brevity.

When the chip is implemented as the terminal device of the embodiments of the present disclosure, the first communication unit 501 in the terminal device may be implemented by the input interface 830 in the chip 800, and the determining unit may be implemented by the processor 810 in the chip 800.

It is to be understood that the chip mentioned in the embodiments of the present disclosure may also be referred to as a system-level chip, a system chip, a chip system or a system-on-chip, or the like.

FIG. 9 is a schematic block diagram of a communication system 900 provided by an embodiment of the present disclosure. As illustrated in FIG. 9, the communication system 900 includes a terminal device 910 and a network device 920.

The terminal device 910 may be configured to implement corresponding functions implemented by the terminal device in the above method, and the network device 920 may be configured to implement corresponding functions implemented by the network device in the above method, which will not be repeated here for the sake of brevity.

It is to be understood that the processor of the present disclosure may be an integrated circuit chip having a signal processing capability. In implementation, the actions of the above method embodiments may be accomplished by integrated logic circuitry of hardware in processor or instructions in the form of software. The above processor may be a general purpose processor, a digital signal processor (DSP), an application specific integrated circuit (ASIC), a field programmable gate array (FPGA) or other programmable logic devices, discrete gates or transistor logic devices, or discrete hardware components. The processor may implement or execute the methods, actions and logic diagrams disclosed in the embodiments of the present disclosure. The general purpose processor may be a microprocessor or any conventional processor. The actions of the method disclosed in the embodiments of the present disclosure may be directly embodied as being executed by a hardware decoding processor or being executed by hardware and software modules in a decoding processor. The software modules may be located in a storage medium mature in the art, such as a random access memory, a flash memory, a read-only memory, a programmable read-only memory or an electrically erasable programmable memory, a register, etc. The storage medium is located in the memory, and the processor reads the information in the memory to complete the actions of the aforementioned method in conjunction with its hardware.

It will be appreciated that the memory in the embodiments of the present disclosure may be a volatile memory or a non-volatile memory, or may also include both a volatile memory and a non-volatile memory. The non-volatile memory may be a read-only memory (ROM), a programmable ROM (PROM), an erasable PROM (EPROM), an electrically EPROM (EPROM) or a flash memory. The volatile memory may be a random access memory (RAM), which serves as an external cache. By way of illustration but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM), a direct rambus RAM (DR RAM). It should be noted that the memory in the systems and methods described herein is intended to include, but is not limited to, these memories and any other suitable types of memory.

It is to be understood that the memory described above is exemplary but not limiting. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM), a direct rambus RAM (DR RAM), etc. That is, the memory in the embodiments of the present disclosure is intended to include, but is not limited to, these memories and any other suitable types of memory.

In an embodiment of the present disclosure, there is further provided a computer-readable storage medium for storing a computer program.

Optionally, the computer-readable storage medium may be applied to the network device of the embodiments of the present disclosure, and the computer program causes a computer to implement corresponding processes implemented by the network device in the methods of the embodiments of the present disclosure, which will not be repeated here for the sake of brevity.

Optionally, the computer-readable storage medium may be applied to the mobile terminal/terminal device of the embodiments of the present disclosure, and the computer program causes a computer to implement corresponding processes implemented by the mobile terminal/terminal device in the methods of the embodiments of the present disclosure, which will not be repeated here for the sake of brevity.

In an embodiment of the present disclosure, there is further provided a computer program product, which includes computer program instructions.

Optionally, the computer program product may be applied to the network device of the embodiments of the present disclosure, and the computer program instructions cause a computer to implement corresponding processes implemented by the network device in the methods of the embodiments of the present disclosure, which will not be repeated here for the sake of brevity.

Optionally, the computer program product may be applied to the mobile terminal/terminal device of the embodiments of the present disclosure, and the computer program instructions cause a computer to implement corresponding processes implemented by the mobile terminal/terminal device in the methods of the embodiments of the present disclosure, which will not be repeated here for the sake of brevity.

In an embodiment of the present disclosure, there is further provided a computer program.

Optionally, the computer program may be applied to the network device of the embodiments of the present disclosure, and the computer program, when running on a computer, causes the computer to implement corresponding processes implemented by the network device in the methods of the embodiments of the present disclosure, which will not be repeated here for the sake of brevity.

Optionally, the computer program may be applied to the mobile terminal/terminal device of the embodiments of the present disclosure, and the computer program, when running on a computer, causes the computer to implement corresponding processes implemented by the mobile terminal/terminal device in the methods of the embodiments of the present disclosure, which will not be repeated here for the sake of brevity.

Those of ordinary skill in the art may realize that the various example units and algorithm steps described in connection with the embodiments disclosed herein may be implemented in electronic hardware or a combination of computer software and electronic hardware. Whether these functions are performed in hardware or software depends on the specific application and design constraints of the technical solution. Professionals may use different methods for each particular application to implement the described functionality, but such implementation should not be considered beyond the scope of the present disclosure.

Those skilled in the art will clearly appreciate that, for convenience and conciseness of description, the specific operating processes of the above-described systems, apparatuses and units may refer to the corresponding processes in the aforementioned method embodiments and will not be repeated herein.

In several embodiments provided herein, it is to be understood that the disclosed systems, apparatuses and methods may be implemented in other manners. For example, the above-described embodiments of the apparatus is only schematic, for example, the division of the units is only a logical function division, and in practice, there may be another division manner, for example, multiple units or components may be combined or integrated into another system, or some features may be ignored or not performed. On the other hand, the coupling or direct coupling or communication connection between each other illustrated or discussed may be indirect coupling or communication connection through some interfaces, devices or units, and may be electrical, mechanical or other form.

The units illustrated as separate elements may or may not be physically separated, and the elements displayed as units may or may not be physical units, i.e. may be located in a place, or may be distributed over a plurality of network units. Part or all of the units may be selected according to the actual needs to achieve the purpose of the embodiments of the present disclosure.

In addition, various functional units in various embodiments of the present disclosure may be integrated in one processing unit, each unit may exist physically alone, or two or more units may be integrated in one unit.

When the functions are realized in the form of software functional units and sold or used as an independent product, they may be stored in a computer readable storage medium. Based on such an understanding, the technical solutions according to the disclosure, in essence or the part contributing to the prior art, or part of the technical solutions may be embodied in the form of a software product. The computer software product is stored in a storage medium, and includes several instructions so that a computer device (which may be a personal computer, a server, a network device or the like) implements all or part of the method according to respective embodiments of the disclosure. The aforementioned storage medium includes various media capable of storing a program code such as a USB disk, a mobile hard drive disk, a read-only memory (ROM), a random access memory (RAM), a magnetic disk or an optical disk.

The above is only the specific implementation of the present disclosure, but the scope of protection of the present disclosure is not limited thereto. Any person skilled in the art may easily think of changes or substitutions within the technical scope disclosed in the present disclosure, which should be covered within the protection scope of the present disclosure. Therefore, the scope of protection of the present disclosure shall be subject to the scope of protection of the claims.

## Claims

1. A method for indicating a time domain resource, comprising:
receiving, by a terminal device, first downlink control information (DCI) from a network device, the first DCI being used for scheduling at least one data transmission,
wherein time domain resource information corresponding to a first data transmission in the at least one data transmission is determined based on the first DCI and a target time domain resource assignment (TDRA) table corresponding to the first data transmission, and a first field in the first DCI is used for indicating time domain resource information corresponding to each of the at least one data transmission.

2. The method of claim 1, wherein if the first data transmission is an uplink data transmission, the target TDRA table is one of the following:
a first uplink TDRA table configured by the network device for DCI format 0_1;
a second uplink TDRA table configured by the network device through first configuration information, the first configuration information being terminal specific configuration information corresponding to the first data transmission;
a third uplink TDRA table configured by the network device for DCI format 0_2;
a fourth uplink TDRA table configured by the network device through second configuration information, the second configuration information being cell specific configuration information corresponding to the first data transmission;
a fifth uplink TDRA table that is default and specified by a protocol; or
a sixth uplink TDRA table for a first DCI format, the first DCI format being a DCI format adopted by the first DCI, and the first DCI format being different from the DCI format 0_1 and the DCI format 0_2.

3. The method of claim 1, wherein if the first data transmission is a downlink data transmission, the target TDRA table is one of the following:
a first downlink TDRA table configured by the network device through third configuration information, the third configuration information being terminal specific configuration information corresponding to the first data transmission;
a second downlink TDRA table configured by the network device for DCI format 1_2;
a third downlink TDRA table configured by the network device through fourth configuration information, the fourth configuration information being cell specific configuration information corresponding to the first data transmission;
a fourth downlink TDRA table that is default and specified by a protocol; or
a fifth downlink TDRA table for a first DCI format, the first DCI format being a DCI format adopted by the first DCI, and the first DCI format being different from the DCI format 1_2.

4. The method of any one of claims 1 to 3, wherein the target TDRA table is determined according to at least one of the following:
a first DCI format, the first DCI format being a DCI format adopted by the first DCI;
a second DCI format, the second DCI format being a DCI format used for scheduling one data transmission; or
a first TDRA table.

5. The method of claim 4, wherein if there is a TDRA table corresponding to the first DCI format, the target TDRA table is determined based on the first DCI format, and the target TDRA table is the TDRA table corresponding to the first DCI format.

6. The method of claim 4 or 5, wherein if there is no TDRA table corresponding to the first DCI format, the target TDRA table is determined according to the second DCI format or the first TDRA table.

7. The method of claim 5 or 6, wherein the TDRA table corresponding to the first DCI format is configured by the network device or predefined by a protocol.

8. The method of claim 4 or 6, wherein if the target TDRA table is determined according to the second DCI format, the target TDRA table is a TDRA table corresponding to the second DCI format.

9. The method of claim 8, wherein if the first data transmission is an uplink data transmission, the second DCI format is one of the following: DCI format 0_0, DCI format 0_1, and DCI format 0_2.

10. The method of claim 8, wherein if the first data transmission is a downlink data transmission, the second DCI format is one of the following: DCI format 1_0, DCI format 1_1, and DCI format 1_2.

11. The method of any one of claims 8 to 10, wherein the second DCI format is determined based on fifth configuration information configured by the network device, the fifth configuration information being used for configuring at least one first correspondence or at least one second correspondence,
wherein the first correspondence is a correspondence between a cell or a bandwidth part (BWP) and a second DCI format, and the second correspondence is a correspondence among a cell or a BWP, a first row index, and a second DCI format, the first row index being used for determining the time domain resource information corresponding to each of the at least one data transmission.

12. The method of any one of claims 8 to 10, wherein the target TDRA table is determined according to a first rule, the first rule comprising at least one of the following:
if the terminal device is not configured with DCI format x_1 and DCI format x_0, and the terminal device is configured with DCI format x_2, the target TDRA table is a TDRA table corresponding to the DCI format x_2;
if the terminal device is not configured with the DCI format x_1, and the terminal device is configured with the DCI format x_0, the target TDRA table is a TDRA table corresponding to the DCI format x_0; or
if the terminal device is configured with the DCI format x_1, the target TDRA table is a TDRA table corresponding to the DCI format x_1;
wherein x takes a value of 0 or 1.

13. The method of claim 4 or 6, wherein if the target TDRA table is determined according to the first TDRA table, the target TDRA table is the first TDRA table.

14. The method of claim 13, wherein the first TDRA table is determined based on sixth configuration information configured by the network device, the sixth configuration information being used for configuring at least one third correspondence or at least one fourth correspondence,
wherein the third correspondence is a correspondence between a cell or a BWP and the first TDRA table, and the fourth correspondence is a correspondence among a cell or a BWP, a first row index, and the first TDRA table, the first row index being used for determining the time domain resource information corresponding to each of the at least one data transmission.

15. The method of claim 13, wherein the target TDRA table is determined according to a second rule, and if the first data transmission is an uplink data transmission, the second rule comprises at least one of the following:
if the terminal device is not configured with a first uplink TDRA table, a second uplink TDRA table, a third uplink TDRA table and a fourth uplink TDRA table, the target TDRA table is a fifth uplink TDRA table;
if the terminal device is not configured with the first uplink TDRA table, the second uplink TDRA table and the third uplink TDRA table, and the terminal device is configured with the fourth uplink TDRA table, the target TDRA table is the fourth uplink TDRA table;
if the terminal device is not configured with the first uplink TDRA table and the second uplink TDRA table, and the terminal device is configured with the third uplink TDRA table, the target TDRA table is the third uplink TDRA table;
if the terminal device is not configured with the first uplink TDRA table, and the terminal device is configured with the second uplink TDRA table, the target TDRA table is the second uplink TDRA table; or
if the terminal device is configured with the first uplink TDRA table, the target TDRA table is the first uplink TDRA table.

16. The method of claim 13, wherein the target TDRA table is determined according to a second rule, and if the first data transmission is an uplink data transmission, the second rule comprises at least one of the following:
if the terminal device is not configured with a second uplink TDRA table, a first uplink TDRA table, a third uplink TDRA table and a fourth uplink TDRA table, the target TDRA table is a fifth uplink TDRA table;
if the terminal device is not configured with the second uplink TDRA table, the first uplink TDRA table, and the third uplink TDRA table, and the terminal device is configured with the fourth uplink TDRA table, the target TDRA table is the fourth uplink TDRA table;
if the terminal device is not configured with the second uplink TDRA table and the first uplink TDRA table, and the terminal device is configured with the third uplink TDRA table, the target TDRA table is the third uplink TDRA table;
if the terminal device is not configured with the second uplink TDRA table, and the terminal device is configured with the first uplink TDRA table, the target TDRA table is the first uplink TDRA table; or
if the terminal device is configured with the second uplink TDRA table, the target TDRA table is the second uplink TDRA table.

17. The method of claim 13, wherein the target TDRA table is determined according to a second rule, and if the first data transmission is an uplink data transmission, the second rule comprises at least one of the following:
if the terminal device is not configured with a first uplink TDRA table, a second uplink TDRA table, a fourth uplink TDRA table and a third uplink TDRA table, the target TDRA table is a fifth uplink TDRA table;
if the terminal device is not configured with the first uplink TDRA table, the second uplink TDRA table and the fourth uplink TDRA table, and the terminal device is configured with the third uplink TDRA table, the target TDRA table is the third uplink TDRA table;
if the terminal device is not configured with the first uplink TDRA table and the second uplink TDRA table, and the terminal device is configured with the fourth uplink TDRA table, the target TDRA table is the fourth uplink TDRA table;
if the terminal device is not configured with the first uplink TDRA table, and the terminal device is configured with the second uplink TDRA table, the target TDRA table is the second uplink TDRA table; or
if the terminal device is not configured with the first uplink TDRA table, the target TDRA table is the first uplink TDRA table.

18. The method of claim 13, wherein the target TDRA table is determined according to a second rule, and if the first data transmission is an uplink data transmission, the second rule comprises at least one of the following:
if the terminal device is not configured with a first uplink TDRA table, a third uplink TDRA table, a second uplink TDRA table and a fourth uplink TDRA table, the target TDRA table is a fifth uplink TDRA table;
if the terminal device is not configured with the first uplink TDRA table, the third uplink TDRA table, and the second uplink TDRA table and the terminal device is configured with the fourth uplink TDRA table, the target TDRA table is the fourth uplink TDRA table;
if the terminal device is not configured with the first uplink TDRA table and the third uplink TDRA table, and the terminal device is configured with the second uplink TDRA table, the target TDRA table is the second uplink TDRA table;
if the terminal device is not configured with the first uplink TDRA table, and the terminal device is configured with the third uplink TDRA table, the target TDRA table is the third uplink TDRA table; or
if the terminal device is configured with the first uplink TDRA table, the target TDRA table is the first uplink TDRA table.

19. The method of claim 13, wherein the target TDRA table is determined according to a second rule, and if the first data transmission is a downlink data transmission, the second rule comprises at least one of the following:
if the terminal device is not configured with a first downlink TDRA table, a second downlink TDRA table and a third downlink TDRA table, the target TDRA table is a fourth downlink TDRA table;
if the terminal device is not configured with the first downlink TDRA table and the second downlink TDRA table, and the terminal device is configured with the third downlink TDRA table, the target TDRA table is the third downlink TDRA table;
if the terminal device is not configured with the first downlink TDRA table, and the terminal device is configured with the second downlink TDRA table, the target TDRA table is the second downlink TDRA table; or
if the terminal device is configured with the first downlink TDRA table, the target TDRA table is the first downlink TDRA table.

20. The method of claim 13, wherein the target TDRA table is determined according to a second rule, and if the first data transmission is a downlink data transmission, the second rule comprises at least one of the following:
if the terminal device is not configured with a first downlink TDRA table, a second downlink TDRA table and a third downlink TDRA table, the target TDRA table is the fourth downlink TDRA table;
if the terminal device is not configured with the first downlink TDRA table and the third downlink TDRA table, and the terminal device is configured with the second downlink TDRA table, the target TDRA table is the second downlink TDRA table;
if the terminal device is not configured with the first downlink TDRA table, and the terminal device is configured with the third downlink TDRA table, the target TDRA table is the third downlink TDRA table; or
if the terminal device is configured with the first downlink TDRA table, the target TDRA table is the first downlink TDRA table.

21. The method of any one of claims 1 to 20, wherein the at least one data transmission corresponds to at least one cell.

22. The method of any one of claims 1 to 21, wherein a value of the first field is used for determining a first target row index, and the time domain resource information corresponding to the first data transmission is determined according to a TDRA row corresponding to a second target row index in the target TDRA table, the second target row index being determined according to the first target row index and a second TDRA table, each row in the second TDRA table indicating at least time domain resource information corresponding to each of the at least one data transmission.

23. The method of any one of claims 1 to 21, wherein a value of the first field is used for determining a third target row index, and the time domain resource information corresponding to each of the at least one data transmission is determined according to a TDRA row corresponding to the third target row index in a corresponding target TDRA table.

24. The method of any one of claims 1 to 23, wherein each of the at least one data transmission does not support repetition.

25. A method for indicating a time domain resource, comprising:
sending, by a network device, first downlink control information (DCI) to a terminal device, the first DCI being used for scheduling at least one data transmission,
wherein time domain resource information corresponding to a first data transmission in the at least one data transmission is determined based on the first DCI and a target time domain resource assignment (TDRA) table corresponding to the first data transmission, and a first field in the first DCI is used for indicating time domain resource information corresponding to each of the at least one data transmission.

26. The method of claim 25, wherein if the first data transmission is an uplink data transmission, the target TDRA table is one of the following:
a first uplink TDRA table configured by the network device for DCI format 0_1;
a second uplink TDRA table configured by the network device through first configuration information, the first configuration information being terminal specific configuration information corresponding to the first data transmission;
a third uplink TDRA table configured by the network device for DCI format 0_2;
a fourth uplink TDRA table configured by the network device through second configuration information, the second configuration information being cell specific configuration information corresponding to the first data transmission;
a fifth uplink TDRA table that is default and specified by a protocol; or
a sixth uplink TDRA table for a first DCI format, the first DCI format being a DCI format adopted by the first DCI, and the first DCI format being different from the DCI format 0_1 and the DCI format 0_2.

27. The method of claim 25, wherein if the first data transmission is a downlink data transmission, the target TDRA table is one of the following:
a first downlink TDRA table configured by the network device through third configuration information, the third configuration information being terminal specific configuration information corresponding to the first data transmission;
a second downlink TDRA table configured by the network device for DCI format 1_2;
a third downlink TDRA table configured by the network device through fourth configuration information, the fourth configuration information being cell specific configuration information corresponding to the first data transmission;
a fourth downlink TDRA table that is default and specified by a protocol; or
a fifth downlink TDRA table for a first DCI format, the first DCI format being a DCI format adopted by the first DCI, and the first DCI format being different from the DCI format 1_2.

28. The method of any one of claims 25 to 27, wherein the target TDRA table is determined according to at least one of the following:
a first DCI format, the first DCI format being a DCI format adopted by the first DCI;
a second DCI format, the second DCI format being a DCI format used for scheduling one data transmission; or
a first TDRA table.

29. The method of claim 28, wherein if there is a TDRA table corresponding to the first DCI format, the target TDRA table is determined based on the first DCI format, and the target TDRA table is the TDRA table corresponding to the first DCI format.

30. The method of claim 28 or 29, wherein if there is no TDRA table corresponding to the first DCI format, the target TDRA table is determined according to the second DCI format or the first TDRA table.

31. The method of claim 29 or 30, wherein the TDRA table corresponding to the first DCI format is configured by the network device or predefined by a protocol.

32. The method of claim 28 or 30, wherein if the target TDRA table is determined according to the second DCI format, the target TDRA table is the TDRA table corresponding to the second DCI format.

33. The method of claim 32, wherein if the first data transmission is an uplink data transmission, the second DCI format is one of the following: DCI format 0_0, DCI format 0_1, and DCI format 0_2.

34. The method of claim 32, wherein if the first data transmission is a downlink data transmission, the second DCI format is one of the following: DCI format 1_0, DCI format 1_1, and DCI format 1_2.

35. The method of any one of claims 32 to 34, wherein the second DCI format is determined based on fifth configuration information configured by the network device, the fifth configuration information being used for configuring at least one first correspondence or at least one second correspondence,
wherein the first correspondence is a correspondence between a cell or a bandwidth part (BWP) and a second DCI format, and the second correspondence is a correspondence among a cell or a BWP, a first row index, and a second DCI format, the first row index being used for determining the time domain resource information corresponding to each of the at least one data transmission.

36. The method of any one of claims 32 to 34, wherein the target TDRA table is determined according to a first rule, the first rule comprising at least one of the following:
if the terminal device is not configured with DCI format x_1 and DCI format x_0, and the terminal device is configured with DCI format x_2, the target TDRA table is a TDRA table corresponding to the DCI format x_2;
if the terminal device is not configured with the DCI format x_1, and the terminal device is configured with the DCI format x_0, the target TDRA table is a TDRA table corresponding to the DCI format x_0; or
if the terminal device is configured with the DCI format x_1, the target TDRA table is a TDRA table corresponding to the DCI format x_1;
wherein x takes a value of 0 or 1.

37. The method of claim 28 or 30, wherein if the target TDRA table is determined based on the first TDRA table, the target TDRA table is the first TDRA table.

38. The method of claim 37, wherein the first TDRA table is determined based on sixth configuration information configured by the network device, the sixth configuration information being used for configuring at least one third correspondence or at least one fourth correspondence,
wherein the third correspondence is a correspondence between a cell or a BWP and the first TDRA table, and the fourth correspondence is a correspondence among a cell or a BWP, a first row index, and the first TDRA table, the first row index being used for determining the time domain resource information corresponding to each of the at least one data transmission.

39. The method of claim 37, wherein the target TDRA table is determined according to a second rule, and if the first data transmission is an uplink data transmission, the second rule comprises at least one of the following:
if the terminal device is not configured with a first uplink TDRA table, a second uplink TDRA table, a third uplink TDRA table and a fourth uplink TDRA table, the target TDRA table is a fifth uplink TDRA table;
if the terminal device is not configured with the first uplink TDRA table, the second uplink TDRA table and the third uplink TDRA table, and the terminal device is configured with the fourth uplink TDRA table, the target TDRA table is the fourth uplink TDRA table;
if the terminal device is not configured with the first uplink TDRA table and the second uplink TDRA table, and the terminal device is configured with the third uplink TDRA table, the target TDRA table is the third uplink TDRA table;
if the terminal device is not configured with the first uplink TDRA table, and the terminal device is configured with the second uplink TDRA table, the target TDRA table is the second uplink TDRA table; or
if the terminal device is configured with the first uplink TDRA table, the target TDRA table is the first uplink TDRA table.

40. The method of claim 37, wherein the target TDRA table is determined according to a second rule, and if the first data transmission is an uplink data transmission, the second rule comprises at least one of the following:
if the terminal device is not configured with a second uplink TDRA table, a first uplink TDRA table, a third uplink TDRA table and a fourth uplink TDRA table, the target TDRA table is a fifth uplink TDRA table;
if the terminal device is not configured with the second uplink TDRA table, the first uplink TDRA table, and the third uplink TDRA table, and the terminal device is configured with the fourth uplink TDRA table, the target TDRA table is the fourth uplink TDRA table;
if the terminal device is not configured with the second uplink TDRA table and the first uplink TDRA table, and the terminal device is configured with the third uplink TDRA table, the target TDRA table is the third uplink TDRA table;
if the terminal device is not configured with the second uplink TDRA table, and the terminal device is configured with the first uplink TDRA table, the target TDRA table is the first uplink TDRA table; or
if the terminal device is configured with the second uplink TDRA table, the target TDRA table is the second uplink TDRA table.

41. The method of claim 37, wherein the target TDRA table is determined according to a second rule, and if the first data transmission is an uplink data transmission, the second rule comprises at least one of the following:
if the terminal device is not configured with a first uplink TDRA table, a second uplink TDRA table, a fourth uplink TDRA table, a third uplink TDRA table and, the target TDRA table is a fifth uplink TDRA table;
if the terminal device is not configured with the first uplink TDRA table, the second uplink TDRA table, and the fourth uplink TDRA table, and the terminal device is configured with the third uplink TDRA table, the target TDRA table is the third uplink TDRA table;
if the terminal device is not configured with the first uplink TDRA table and the second uplink TDRA table, and the terminal device is configured with the fourth uplink TDRA table, the target TDRA table is the fourth uplink TDRA table;
if the terminal device is not configured with the first uplink TDRA table, and the terminal device is configured with the second uplink TDRA table, the target TDRA table is the second uplink TDRA table; or
if the terminal device is not configured with the first uplink TDRA table, the target TDRA table is the first uplink TDRA table.

42. The method of claim 37, wherein the target TDRA table is determined according to a second rule, and if the first data transmission is an uplink data transmission, the second rule comprises at least one of the following:
if the terminal device is not configured with a first uplink TDRA table, a third uplink TDRA table, a second uplink TDRA table and a fourth uplink TDRA table, the target TDRA table is a fifth uplink TDRA table;
if the terminal device is not configured with the first uplink TDRA table, the third uplink TDRA table, and the second uplink TDRA table and the terminal device is configured with the fourth uplink TDRA table, the target TDRA table is the fourth uplink TDRA table;
if the terminal device is not configured with the first uplink TDRA table and the third uplink TDRA table, and the terminal device is configured with the second uplink TDRA table, the target TDRA table is the second uplink TDRA table;
if the terminal device is not configured with the first uplink TDRA table, and the terminal device is configured with the third uplink TDRA table, the target TDRA table is the third uplink TDRA table; or
if the terminal device is configured with the first uplink TDRA table, the target TDRA table is the first uplink TDRA table.

43. The method of claim 37, wherein the target TDRA table is determined according to a second rule, and if the first data transmission is a downlink data transmission, the second rule comprises at least one of the following:
if the terminal device is not configured with a first downlink TDRA table, a second downlink TDRA table and a third downlink TDRA table, the target TDRA table is a fourth downlink TDRA table;
if the terminal device is not configured with the first downlink TDRA table and the second downlink TDRA table, and the terminal device is configured with the third downlink TDRA table, the target TDRA table is the third downlink TDRA table;
if the terminal device is not configured with the first downlink TDRA table, and the terminal device is configured with the second downlink TDRA table, the target TDRA table is the second downlink TDRA table; or
if the terminal device is configured with the first downlink TDRA table, the target TDRA table is the first downlink TDRA table.

44. The method of claim 37, wherein the target TDRA table is determined according to a second rule, and if the first data transmission is a downlink data transmission, the second rule comprises at least one of the following:
if the terminal device is not configured with a first downlink TDRA table, a second downlink TDRA table and a third downlink TDRA table, the target TDRA table is the fourth downlink TDRA table;
if the terminal device is not configured with the first downlink TDRA table and the third downlink TDRA table, and the terminal device is configured with the second downlink TDRA table, the target TDRA table is the second downlink TDRA table;
if the terminal device is not configured with the first downlink TDRA table, and the terminal device is configured with the third downlink TDRA table, the target TDRA table is the third downlink TDRA table; or
if the terminal device is configured with the first downlink TDRA table, the target TDRA table is the first downlink TDRA table.

45. The method of any one of claims 25 to 44, wherein the at least one data transmission corresponds to at least one cell.

46. The method of any one of claims 25 to 45, wherein a value of the first field is used for determining a first target row index, and the time domain resource information corresponding to the first data transmission is determined according to a TDRA row corresponding to a second target row index in the target TDRA table, the second target row index being determined according to the first target row index and a second TDRA table, each row in the second TDRA table indicating at least time domain resource information corresponding to each of the at least one data transmission.

47. The method of any one of claims 25 to 45, wherein a value of the first field is used for determining a third target row index, and the time domain resource information corresponding to each of the at least one data transmission is determined according to a TDRA row corresponding to the third target row index in the target TDRA table.

48. The method of any one of claims 25 to 47, wherein each of the at least one data transmission does not support repetition.

49. A terminal device, comprising:
a first communication unit, configured to receive first downlink control information (DCI) from a network device, the first DCI being used for scheduling at least one data transmission,
wherein time domain resource information corresponding to a first data transmission in the at least one data transmission is determined based on the first DCI and a target time domain resource assignment (TDRA) table corresponding to the first data transmission, and a first field in the first DCI is used for indicating time domain resource information corresponding to each of the at least one data transmission.

50. A network device, comprising:
a second communication unit, configured to send first downlink control information (DCI) to a terminal device, the first DCI being used for scheduling at least one data transmission,
wherein time domain resource information corresponding to a first data transmission in the at least one data transmission is determined based on the first DCI and a target time domain resource assignment (TDRA) table corresponding to the first data transmission, and a first field in the first DCI is used for indicating time domain resource information corresponding to each of the at least one data transmission.

51. A terminal device, comprising: a processor and a memory for storing a computer program, wherein the processor is configured to call and execute the computer program stored in the memory to implement the method of any one of claims 1 to 24.

52. A network device, comprising: a processor and a memory, the memory for storing a computer program, wherein the processor is configured to call and execute the computer program stored in the memory to implement the method of any one of claims 25 to 48.

53. A chip, comprising: a processor, configured to call and execute a computer program from a memory to cause a device equipped with the chip to implement the method of any one of claims 1 to 24.

54. A chip, comprising: a processor, configured to call and execute a computer program from a memory to cause a device equipped with the chip to implement the method of any one of claims 25 to 48.

55. A computer-readable storage medium, configured to store a computer program that causes a computer to implement the method of any one of claims 1 to 24.

56. A computer-readable storage medium, configured to store a computer program that causes a computer to implement the method of any one of claims 25 to 48.

57. A computer program product, comprising computer program instructions that cause a computer to implement the method of any one of claims 1 to 24.

58. A computer program product, comprising computer program instructions that cause a computer to implement the method of any one of claims 25 to 48.

59. A computer program, wherein the computer program causes a computer to implement the method of any one of claims 1 to 24.

60. A computer program, wherein the computer program causes a computer to implement the method of any one of claims 25 to 48.
